# EUROPEAN PATENT APPLICATION

(11) **EP 4 424 448 A2**
(43) Date of publication of application: **04.09.2024**
(21) Application number: 24161183.9
(22) Date of filing: 04.03.2024
(51) Int. Cl.: B23K 9/04, B22F 10/25, B22F 10/322, B22F 12/20, B22F 12/53, B22F 12/70, B23K 9/16, B23K 9/32, B23K 10/02, B29C 64/209, B33Y 30/00

(54) **SYSTEM FOR WELDING USING CRYOGENIC SOURCES**

(30) Priority: 03.03.2023 US 202363488362 P
(71) Applicant: Relativity Space, Inc., Long Beach, CA 90807 (US)
(72) Inventor: REID, Michael, Long Beach, CA 90807 (US); GRUBER, Fritz, Long Beach, CA 90807 (US); KROL, Jeremy, Long Beach, CA 90807 (US); JOHNS, Jenna, Long Beach, CA 90807 (US)
(74) Representative: EIP

(57) **Abstract**

Cryogenic sources can be used for shielding in wire-based additive manufacturing and the invention relates to an additive manufacturing system comprising an electric energy source configured to provide an electric energy; and a print head configured to receive a feedstock and a cryogenic fluid and pass the feedstock and the cryogenic fluid through a distal end thereof.

## Description

### FIELD OF THE INVENTION

This application generally relates to systems and methods for welding. More specifically, this application relates to systems and methods for additive manufacturing.

### BACKGROUND

Additive manufacturing is a process by which part is manufactured by adding one layer of material on top of another in a sequence or pattern that would result in a solid part being built. This method of manufacturing is commonly referred to as three dimensional or 3-D printing and can be done with different materials, including plastic and metal.

Wire-based 3-D printing of metallic structures typically involves using an energy source to create a weld pool and feeding metal from a wire feed material into the weld pool by way of a printing head or a printing head nozzle. Energy is used to create the weld pool. Some systems use electricity and others use lasers for the energy. Electric systems like Wire Arc Additive Manufacturing (WAAM) typically pass an electric current through the feed wire into the weld pool. The printing head, and subsequently the weld pool can move. As the printing head and the weld pool moves, the trailing edge of the pool cools and solidifies. Through this process of gradually moving the printing head along a path, and depositing one layer on a previous layer, can lead to a fully printed part.

The process by which material is deposited can be controlled by the use of shielding gas around the feed material. The shielding gas can protect the weld pool resulting in an overall better part by protecting the hot metal from corrosive gases, moisture and contaminants. Carbon dioxide, argon, helium, and oxygen have been used in the welding processes as shielding gases.

### SUMMARY OF THE INVENTION

Systems and methods in accordance with some embodiments of the invention are directed to cryogenic shielding for wire arc additive manufacturing. Some embodiments of the invention are directed to cooling an additively manufactured part with a cryogenic source. Some embodiments of the invention are directed to cooling a weld puddle with a cryogenic source substantially without interfering with the arc. Each of these aspects of the invention can be implemented independently. Some embodiments of the invention combine these uses of cryogenic sources. For example, embodiments include (1) shielding the arc used for additive manufacturing with a cryogenic source; and (2) cooling the resulting additively manufactured part with a cryogenic source. Other embodiments include: (1) cooling the additively manufactured part with a cryogenic source; and (2) cooling the weld puddle substantially without interfering with the arc.

Some embodiments include an additive manufacturing system, comprising: a print head comprising a nozzle, wherein the nozzle is configured to receive a feedstock from a proximal end; wherein an arc is configured to melt the feedstock at a distal end of the nozzle such that the molten feedstock may be deposited on a substrate in a layer-by-layer fashion to form a part; wherein the nozzle is configured to receive a cryogenic source from the proximal end thereof; and wherein, when in use, the cryogenic source expands in volume when in contact with the nozzle such that the expanded cryogenic source shields the arc and the molten feedstock and cools the substrate during printing.

In some embodiments, the nozzle comprises a material with a higher melting temperature than the feedstock.

In some embodiments, the expanded cryogenic source solidifies a spatter comprising the molten feedstock such that the spatter substantially resists attaching to the nozzle.

In some embodiments, the nozzle comprises copper and the feedstock comprises aluminum.

Some embodiments further comprise a cryogenic storage tank and a cryogenic hose to supply the cryogenic source to the nozzle.

In some embodiments, the nozzle comprises a first channel and a second channel adjacent to and separate from the first channel, wherein the first channel is configured to receive the cryogenic source and the second channel is configured to receive a second cryogenic source.

In some embodiments, the nozzle comprises a first channel and a second channel adjacent to and separate from the first channel, wherein the first channel is configured to receive a shielding gas and the second channel is configured to receive the cryogenic source.

In some embodiments, the shielding gas comprises argon, helium, carbon dioxide, nitrogen, hydrogen, neon, xenon, or a combination thereof.

In some embodiments, the cryogenic source comprises cryogenic liquid argon, cryogenic liquid nitrogen, cryogenic liquid helium, cryogenic liquid neon, cryogenic liquid oxygen, cryogenic liquid xenon, cryogenic argon gas, cryogenic nitrogen gas, cryogenic helium gas, cryogenic neon gas, cryogenic oxygen gas, cryogenic xenon gas, cryogenic air, or a combination thereof.

In some embodiments, the cryogenic source has a temperature lower than or equal to -190 °C.

Some embodiments include a method for shielding in additive manufacturing, comprising: feeding a wire feedstock through a nozzle; melting the wire feedstock with an arc at a distal end of the nozzle; depositing the molten feedstock on a substrate in a layer-by-layer fashion to form a part; and feeding a cryogenic source through the nozzle, such that the cryogenic source expands in volume when in contact with the nozzle and the expanded cryogenic source shields the arc and the molten feedstock.

In some embodiments, the nozzle comprises a material with a higher melting temperature than the feedstock.

In some embodiments, the expanded cryogenic source solidifies a spatter comprising the molten feedstock such that the spatter substantially resists attaching to the nozzle.

In some embodiments, the nozzle comprises copper and the feedstock comprises aluminum.

In some embodiments, the cryogenic source from a cryogenic storage tank and a cryogenic hose to the nozzle.

In some embodiments, the cryogenic storage tank further comprises a cryogenic regulator valve to control a flow of the cryogenic source.

Some embodiments further comprise feeding the cryogenic source through a first channel of the nozzle and feeding a second cryogenic source through a second channel of the nozzle that is adjacent to and separated from the first channel of the nozzle.

Some embodiments further comprise feeding a shielding gas through a first channel of the nozzle and feeding the cryogenic source through a second channel of the nozzle that is adjacent to and separated from the first channel of the nozzle.

In some embodiments, the shielding gas is selected from the group consisting of: argon, helium, carbon dioxide, nitrogen, hydrogen, neon, xenon, and combinations thereof.

In some embodiments, the cryogenic source is selected from the group consisting of: cryogenic liquid argon, cryogenic liquid nitrogen, cryogenic liquid helium, cryogenic liquid neon, cryogenic liquid oxygen, cryogenic liquid xenon, cryogenic argon gas, cryogenic nitrogen gas, cryogenic helium gas, cryogenic neon gas, cryogenic oxygen gas, cryogenic xenon gas, cryogenic air, and combinations thereof.

In some embodiments, the cryogenic source has a temperature lower than or equal to -190 °C.

Some embodiments include a printing nozzle comprising: an inner channel defined within a body and extending a length of the body from a proximal end configured to receive a feedstock and a shielding gas and to a distal end that, when the printing nozzle is in use, is proximal a welding arc configured to melt the feedstock, and an outer channel concentrically located exterior to the inner channel and defined between the body and a housing, the outer channel configured to receive a cryogenic source that is distinct from the shielding gas and pass the cryogenic gas to a region adjacent the welding arc.

In some embodiments, the nozzle is formed from a material with a higher melting temperature than the feedstock.

In some embodiments, the nozzle comprises copper and the feedstock comprises aluminum.

In some embodiments, when in use, the cryogenic source expands in volume when in contact with the nozzle such that the expanded cryogenic source shields the arc and the molten feedstock.

In some embodiments, the cryogenic source solidifies a spatter from the molten feedstock such that the spatter substantially resists attaching to the nozzle.

In some embodiments, the shielding gas is a second cryogenic source.

In some embodiments, the shielding gas is a room temperature shielding gas.

In some embodiments, the shielding gas consists essentially of argon, helium, carbon dioxide, nitrogen, hydrogen, neon, xenon, or a combination thereof.

In some embodiments, the cryogenic source consists essentially of cryogenic liquid argon, cryogenic liquid nitrogen, cryogenic liquid helium, cryogenic liquid neon, cryogenic liquid oxygen, cryogenic liquid xenon, cryogenic argon gas, cryogenic nitrogen gas, cryogenic helium gas, cryogenic neon gas, cryogenic oxygen gas, cryogenic xenon gas, cryogenic air, or a combination thereof.

In some embodiments, the second cryogenic source consists essentially of cryogenic liquid argon, cryogenic liquid nitrogen, cryogenic liquid helium, cryogenic liquid neon, cryogenic liquid oxygen, cryogenic liquid xenon, cryogenic argon gas, cryogenic nitrogen gas, cryogenic helium gas, cryogenic neon gas, cryogenic oxygen gas, cryogenic xenon gas, cryogenic air, or a combination thereof.

In some embodiments, the cryogenic source has a temperature lower than or equal to -190 °C.

Some embodiments include a method operating a nozzle, comprising: feeding a feedstock from a proximal end of the nozzle to a distal end of the nozzle proximal a welding arc; with the welding arc, melting the feedstock; feeding a cryogenic source through the nozzle toward the arc, thereby expanding the cryogenic source; and with the expanded cryogenic source, solidifying a spatter from the molten feedstock such that the spatter substantially resists attaching to the nozzle.

In some embodiments, the nozzle has a higher melting temperature than the feedstock.

In some embodiments, the nozzle comprises a material that includes more copper than any other individual material and the feedstock includes more aluminum than any other individual material.

In some embodiments, the cryogenic source is selected from the group consisting of: cryogenic liquid argon, cryogenic liquid nitrogen, cryogenic liquid helium, cryogenic liquid neon, cryogenic liquid oxygen, cryogenic liquid xenon, cryogenic argon gas, cryogenic nitrogen gas, cryogenic helium gas, cryogenic neon gas, cryogenic oxygen gas, cryogenic xenon gas, cryogenic air, and combinations thereof.

In some embodiments, the cryogenic source has a temperature lower than or equal to -190 °C.

Some embodiments further comprise feeding a second cryogenic source through the nozzle via a second nozzle channel that is distinct from a first nozzle channel configured to carry the cryogenic source.

In some embodiments, the second cryogenic source is selected from the group consisting of: cryogenic liquid argon, cryogenic liquid nitrogen, cryogenic liquid helium, cryogenic liquid neon, cryogenic liquid oxygen, cryogenic liquid xenon, cryogenic argon gas, cryogenic nitrogen gas, cryogenic helium gas, cryogenic neon gas, cryogenic oxygen gas, cryogenic xenon gas, cryogenic air, and any combinations thereof.

In some embodiments, the feedstock is fed through an inner channel of the nozzle and the cryogenic source is fed through an outer channel of the nozzle concentrically located exterior to the inner channel.

Some embodiments further comprise feeding a shielding gas around the feedstock through the inner channel of the nozzle.

In some embodiments, the shielding gas is a second cryogenic source.

In some embodiments, the shielding gas is not a cryogenic liquid or a cryogenic gas.

In some embodiments, the shielding gas is selected from the group consisting of: argon, helium, carbon dioxide, nitrogen, hydrogen, neon, xenon, and combinations thereof.

Additional embodiments and features are set forth in part in the description that follows, and in part will become apparent to those skilled in the art upon examination of the specification or may be learned by the practice of the disclosure. A further understanding of the nature and advantages of the present disclosure may be realized by reference to the remaining portions of the specification and the drawings, which forms a part of this disclosure.

### BRIEF DESCRIPTION OF THE DRAWINGS

The description will be more fully understood with reference to the following figures, which include embodiments of the invention and should not be construed as a complete recitation of the scope of the invention, wherein:
Figure 1 illustrates a schematic of a flow of shielding gas in WAAM in accordance with prior art.
Figure 2 illustrates a schematic of one configuration of cryogenic shielding for WAAM in accordance with an embodiment.
Figure 3 illustrates a schematic of one configuration of cryogenic shielding for WAAM in accordance with an embodiment.
Figure 4 illustrates a schematic of one configuration of cryogenic shielding for WAAM in accordance with an embodiment.
Figure 5A illustrates a cryogenic shielding setup for WAAM in accordance with an embodiment.
Figure 5B illustrates a cryogenic liquid evaporating into a gas during printing in accordance with an embodiment.
Figure 5C illustrates a WAAM printing nozzle attached to a cryogenic tubing in accordance with an embodiment.
Figures 6A through 6E illustrate nozzles for cryogenic shielding in accordance with an embodiment.
Figure 7 shows two possible processes that cryogenic shielding can prevent molten spatter build up in nozzles in accordance with an embodiment.
Figure 8A illustrates a 2-cup nozzle after about 6 hours of printing with cryogenic shielding in accordance with an embodiment.
Figure 8B illustrates a nozzle with spatter build-up inside using room temperature argon shielding in accordance with prior art.
Figure 9A shows a copper nozzle with a large amount of spatter buildup in the center after welding in accordance with prior art.
Figure 9B shows the nozzle being flash frozen with liquid nitrogen to a temperature lower than about -190 °C in accordance with an embodiment.
Figure 9C shows that the flash frozen spatter falls out after gently tapping the nozzle in accordance with prior art.
Figures 10A - 10B illustrate a comparison between printed articles using cryogenic shielding and regular shielding in accordance with an embodiment.
Figure 11 illustrates a WAAM print process with cryogenic argon shielding in accordance with an embodiment.
Figures 12A - 12B illustrate cryogenic shielding in vertical orientation printing and in horizontal orientation printing respectively in accordance with an embodiment.
Figure 13 illustrates temperature of the print part during cryogenic shielding in accordance with an embodiment.
Figure 14 illustrates a microscopic image of printed article with cryogenic argon shielding in accordance with an embodiment.
Figures 15A - 15B illustrate images of microstructures of printed article in accordance with an embodiment.
Figure 16A illustrates heat treatment of a printed article with cryogenic argon shielding in accordance with an embodiment.
Figures 16B - 16C illustrate microhardness of a printed article with cryogenic argon shielding in accordance with an embodiment.
Figures 17A - 17B illustrate microscopic images of a printed article with cryogenic argon shielding in accordance with an embodiment.
Figures 18A - 18B illustrate schematic plan views of an additive manufacturing system with active part cooling using a cryogenic source in accordance with an embodiment.
Figures 19A - 19D illustrate schematic plan and perspective views of a nozzle for delivering a cryogenic source for use in active part cooling in accordance with an embodiment.
Figure 20 illustrates another embodiment of a nozzle for delivering a cryogenic source for use in active part cooling.
Figures 21A - 21D illustrate schematic plan views of a nozzle for delivering a cryogenic source for use in active weld puddle cooling in accordance with an embodiment.

### DETAILED DESCRIPTION OF THE INVENTION

Systems and methods for using cryogenic sources for shielding during welding are illustrated in the description herein. Many embodiments use cryogenic sources including cryogenic liquids (or cryogens) and/or cryogenic gases for shielding during wire arc additive manufacturing (WAAM) processes. In this disclosure, "cryogenic liquid" refers to a material (element or compound) that has a gaseous state at normal temperatures and pressures but is in a liquid state because of extreme cooling. A "cryogenic gas" refers to a cryogenic liquid that has been vaporized and is still at a low temperature.

The cryogenic sources have a temperature lower than or equal to about 120 Kelvin (or about -153 degrees Celsius; or about -243 degrees Fahrenheit). Cryogenic sources can be fed from storage tanks and sent to the nozzles. The cryogenic sources can be sent down through channels of the print nozzle to the tip of the nozzle. As the cryogenic liquids touch the nozzle at the room temperature, some evaporates into gases and expands in volume. The inventors realized that expanded cryogenic gases can provide better gas shielding for the molten materials and the printed part during printing. The cryogenic liquids that do not evaporate stay liquid and contact the part. The cryogenic gas and liquid actively quench and cool the weld and perform functions such as cleaning the part and/or nozzle and reducing oxide formation in accordance with several embodiments.

Using cryogenic sources for shielding in accordance with several embodiments can reduce solidification time of deposited materials, reduce heat build-up, and reduce expansion rate of the print articles. The fast-cooling processes due to the use of cryogenic sources can improve the geometries and mechanical properties of the print parts. In some embodiments, using the cryogenic sources for shielding helps to keep the nozzle clean by reducing spatter build-up in the nozzles and/or contact tips, and/or by enabling easier spatter removal.

For the purpose of this disclosure, the cryogenic sources include cryogenic liquids and cryogenic gases unless otherwise specified. And unless specified otherwise, "welding" does not require fusing two or more parts together using the added metal and, instead, includes an additive manufacturing process that adds metal from a wire feed material into a weld pool.

### Cryogenic Shielding for WAAM

WAAM can include a protective environment that uses shielding gas to protect the print part from oxidation and surrounding environmental factors. Shielding gas can be flowed surrounding the arc and the print part. The arc is encapsulated by the shielding gas shroud to keep the print part from oxidizing while it's hot. Argon (Ar) or a mixture of Ar and carbon dioxide (CO₂) have been used in WAAM as shielding gases. The shielding gas characteristics are important because they can affect the mode of heat transfer, process stability, geometry and appearance of beads, surface waviness, deposition efficiency, and impact mechanical properties.

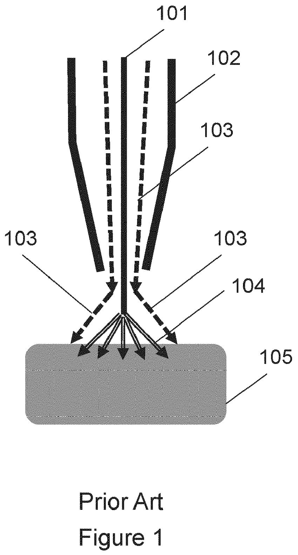

Figure 1 illustrates a schematic of gas shielding in a prior art WAAM system. The WAAM system uses a feed wire 101. The feed wire can be fed through a nozzle 102. A heat source (not shown) creates an arc 104 that melts the wire 101. The melted wire is deposited on a substrate (not shown) to form a printed part 105 as it cools. The deposition process can proceed to print on previously deposited and cooled metal from the feed wire to build a printed part. Shielding gas 103 can be used to insulate the arc to prevent oxidation during printing. The shielding gas 103 can also be used for protecting the printed part from moisture or corrosive environmental elements. The shielding gas 103 can be flowed down the nozzle 102 surrounding the wire 101.

Many embodiments utilize cryogenic sources including cryogenic liquids and cryogenic gases for shielding during WAAM processes. Cryogenic shielding in accordance with many embodiments can be applied to wire-based additive manufacturing in vertical orientations and/or in horizontal orientations. In several embodiments, cryogenic liquids and cryogenic gases can be fed from the storage tanks into the nozzle and flowed surrounding the arc and the print part during the printing processes. As the cryogenic temperature liquids (lower than about -153 °C) contact with the nozzle, the liquids evaporate into gases and expand in volume. The increase in volume of the cryogenic sources provides better shielding coverage compared to normal shielding gases. Shielding coverage can protect the molten material and/or the print part from forming oxides and from environmental contaminants. Several embodiments include the inventive realization that even excessive amounts of cryogenic shielding source do not extinguish the arc.

Cryogenic shielding in accordance with many embodiments can cool the print part rapidly during printing. Continuous deposition without cooling can produce excessive heat input in a local region, resulting in high temperatures and re-melting, and hence poor dimensional accuracy and surface finish. A common practice to prevent heat accumulation in WAAM may include introducing idle time between subsequent layer deposition. Another approach may be using active cooling systems to increase convection heat flux to the environment using water cooling and air-jet cooling, or *in situ* cooling with a thermoelectric cooler. Many embodiments use cryogenic shielding to fast cool the print parts. The cryogenic sources used for shielding have a temperature lower than or equal to about 120 Kelvin (or about -153 °C; or about -243 °F); or lower than or equal to about 83 Kelvin (or about -190 °C; or about -310 °F). The cryogenic temperature during the printing processes can reduce heat build-up and reduce the solidification time of deposited materials. The fast cooling and/or quenching as a result of cryogenic shielding can reduce the expansion rate of the print article and improve print qualities. Cryogenic shielding/cooling reduces the temperature of the printed article quickly and reduces the amount of time the metal needs to be protected from an oxidizing environment. This results in the print head being able to move faster.

In many embodiments, the cryogenic shielding can keep the printing nozzle at a low temperature to prevent spatter build-up. Spatter produced during the deposition process can clog the nozzle and significantly affect gas flow and coverage resulting in poor deposition and ultimately poor material properties. The cryogenic sources in contact with the nozzle can keep the nozzle at such a low temperature that the spatter would solidify before adhering to the nozzle and/or the contact tip. The solidified spatter may fall off the nozzle and/or the contact tip without adhering.

Various types of cryogenic liquids and cryogenic gases can be used for shielding in WAAM in accordance with many embodiments. In some embodiments, noble gas elements may be used for cryogenic shielding. In some embodiments, nitrogen may be used for cryogenic shielding. Examples of cryogenic liquids include (but are not limited to) cryogenic liquid argon, cryogenic liquid nitrogen, cryogenic liquid helium, cryogenic liquid neon, cryogenic liquid oxygen, cryogenic liquid xenon, and any combinations thereof. Examples of cryogenic gases include (but are not limited to) cryogenic argon gas, cryogenic nitrogen gas, cryogenic helium gas, cryogenic neon gas, cryogenic oxygen gas, cryogenic xenon gas, cryogenic air, and any combinations thereof. Several embodiments use cryogenic argon liquid and cryogenic argon gas for shielding. Some embodiments use cryogenic nitrogen liquid and cryogenic nitrogen gas for shielding. The inventors discovered that cryogenic liquid argon will not contaminate or substantially will not contaminate the arc. The inventors also discovered that cryogenic liquid nitrogen has a higher expansion rate than cryogenic liquid argon. Although liquid nitrogen has a higher probability of arc contamination than liquid argon, it is also cheaper. Any perceived disadvantages of these materials should not be construed as teaching away from their use.

In several embodiments, at least one cryogenic source can be used for shielding in WAAM. In some embodiments, a first shielding can be used to shield the arc, and a second shielding can be positioned to surround the first shielding. The first shielding and the second shielding can be positioned concentrically such that the second shielding surrounds the first shielding. In certain embodiments, the first shielding can be a room temperature (from about 20 °C to about 25 °C) shielding gas including argon, helium, carbon dioxide, nitrogen, hydrogen, neon, xenon, and any combinations thereof. In various embodiments, the first shielding can be a cryogenic liquid and/or a cryogenic gas. In some embodiments, the second shielding can be a cryogenic liquid and/or a cryogenic gas. In many embodiments, the first shielding can be a cryogenic source and the second shielding may not be necessary.

In many embodiments, the first shielding can be a room temperature gas and the second shielding can be a cryogenic source. Any type of a room temperature shielding gas can be used as the first shielding as long as the first shielding is not reactive or is substantially non-reactive with the second cryogenic shielding. In various embodiments, the first shielding and the second shielding can be cryogenic sources.

In some embodiments, the first shielding can be a room temperature argon gas and the second shielding can be a cryogenic argon source. In several embodiments, the first shielding can be a room temperature argon gas and the second shielding can be a cryogenic nitrogen source. In certain embodiments, the first shielding can be a room temperature argon gas and the second shielding can be a cryogenic helium source. In various embodiments, the first shielding can be a cryogenic argon source and the second shielding may not be needed.

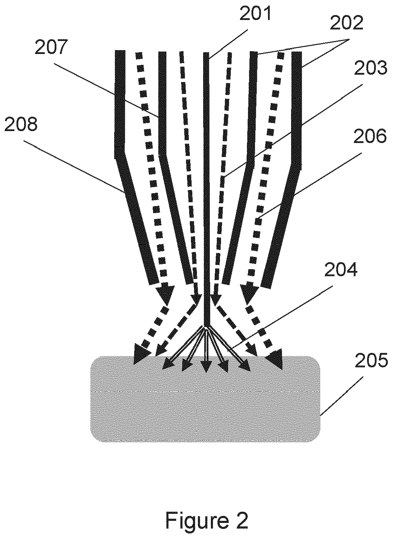

Figure 2 illustrates a schematic of one configuration of cryogenic shielding for WAAM in accordance with an embodiment. The WAAM system uses a feed wire 201. The feed wire 201 can be fed through a nozzle 202. A heat source (not shown) creates an arc 204 that melts the wire 201. The melted wire is deposited on a substrate (not shown) and, through printing and cooling, forms a printed part 205. Room temperature shielding gas 203 such as argon can be used to insulate the arc to prevent oxidation while the printed part is hot. A cryogenic source (cryogenic liquid and/or cryogenic gas) 206 can be used to provide additional shielding. The nozzle 202 can be a 2-cup nozzle that has an inner wall 207 and an outer wall 208. The room temperature shielding gas 203 can be flowed inside the inner wall 207 of the nozzle surrounding the feed wire 201. The cryogenic shielding 206 can be flowed between the inner wall 207 and the outer wall 208 of the nozzle. The cryogenic shielding 206 provides better shielding coverage and fast cooling of the printed article during the WAAM processes. The cryogenic source can be cryogenic liquid and/or cryogenic gas. Cryogenic liquid can be siphoned from a storage unit to funnel down the nozzle. The cryogenic liquid evaporates and expands to cryogenic gas when it touches the room temperature nozzle. The expanded cryogenic gas provides better shielding coverage. The cryogenic liquid that does not expand to gas form can stay in liquid form and flow down the nozzle. The cold cryogenic liquid and/or gas can cool the print part quickly to reduce heat accumulation, and prevent spatter build up in the nozzle and/or contact tips.

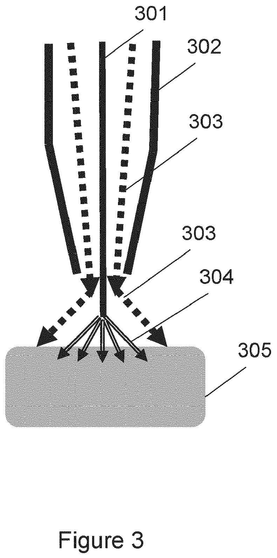

Figure 3 illustrates a schematic of one configuration of cryogenic shielding for WAAM in accordance with an embodiment. The WAAM system uses a feed wire 301. The feed wire 301 can be fed through a nozzle 302. An electrical source (not shown) creates an arc 304, producing heat that melts the wire. The melted wire is deposited on a substrate (not shown) and, through printing and cooling, forms a printed part 305. Cryogenic shielding 303 such as cryogenic argon or cryogenic nitrogen can be used to insulate the arc 304 to prevent oxidation and fast cool the printed part 305. Cryogenic liquid can be transferred via a pipe from a storage tank and flowed down the nozzle. The cryogenic liquid evaporates and expands to cryogenic gas when it is in contact with the room temperature nozzle. The expanded cryogenic gas provides better shielding coverage to prevent oxidation, and the cryogenic temperature can fast cool the print part and prevent spatter build up.

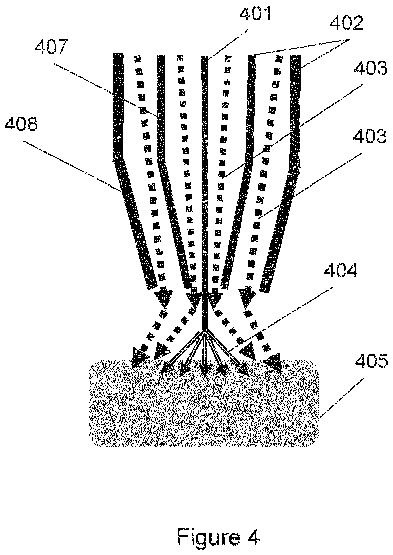

Figure 4 illustrates a schematic of one configuration of cryogenic shielding for WAAM in accordance with an embodiment. The WAAM system uses a feed wire 401. The feed wire 401 can be fed through a 2-cup nozzle 402. A heat source (not shown) creates an arc 404 that melts the wire. The melted wire is deposited on a substrate (not shown) and, through printing and cooling, forms a printed part 405. Cryogenic shielding source 403 can be used to insulate the arc in the inner cup and the outer cup of the nozzle. The nozzle 402 can have an inner wall 407 and an outer wall 408. The cryogenic shielding source 403 can be flowed inside the inner wall 407 of the nozzle surrounding the feed wire 401, and flowed between the inner wall 407 and the outer wall 408 of the nozzle. The cryogenic source in the inner cup and the outer cup can be the same or different. The cryogenic shielding 403 provides additional shielding and better coverage, fast cooling of the printed article during the WAAM processes. The cryogenic source can be cryogenic liquid and/or cryogenic gas, such as cryogenic argon, cryogenic nitrogen, cryogenic helium, and any mixture thereof.

Many embodiments control the flow rate of the cryogenic shielding to provide the desired flow characteristics. The shielding can dissipate heat in ways of forced convection and/or laminar flow. The flow characteristics can be controlled by adjusting the shielding composition and/or flow rate. Several embodiments control the flow rate of the cryogenic source using cryogenic specific regulators. Some embodiments use in-line regulators to produce consistent cryogenic shielding flow. Many embodiments use expansion chambers or temperature regulation methods to ensure consistent cryogenic conditions including flow rate, amount of gas vs liquid, temperature of cryogenic shielding, pressure of gas exiting, and/or distribution of liquid vs gas in the stream. A number of embodiments use diffusers to regulate cryogenic source flow to be more homogeneous. In many embodiments, the cryogenic lines can be insulated to reduce excessive over freezing and inconsistencies in temperature.

In several embodiments, the second cryogenic shielding can have a similar flow rate as the first room temperature shielding gas. In some embodiments, the second cryogenic shielding can have a higher flow rate than the first room temperature shielding gas to provide more chilling. In certain embodiments, the second cryogenic shielding can have a lower flow rate than the first room temperature argon shielding gas to maximize the efficiency of the cryogenic source.

Systems and methods for cryogenic shielding with specific configurations that can be utilized for additive manufacturing and in applications that require shielding in accordance with various embodiments of the invention are discussed further below.

### Cryogenic Shielding Setups

In many embodiments, cryogenic liquid cylinders or cryogenic storage dewars can be used to provide the cryogenic shielding source. Some embodiments use cryogenic compatible tubing (or lines, piping, hose) to transfer the cryogenic source. The tubing can be vacuum insulated to keep the cryogenic source cold during the transfer process. Keeping the cryogenic source cold can prevent the liquid source from evaporating and leaking. The tubing can be connected to at least one outlet of the cryogenic storage cylinder. In some embodiments, cryogenic specific regulators and/or diffusers can be used for flow control. The flow of the cryogenic source can be controlled by adjusting the composition and/or flow rate. Thermocouples can be used to monitor the temperature of the cryogenic sources in accordance with certain embodiments.

Cryogenic shielding can have several advantages compared to shielding with room temperature gas. Cryogenic shielding can provide fast quenching to the printed part in accordance with many embodiments. The cryogenic liquid and/or gas has temperature lower than about -150 °C. When flowing a stream of (mostly) cryogenic liquid argon down the nozzle and to the printed part, the low temperature enables quenching and chilling the part quickly. With the use of cryogenic shielding, the part can avoid being heated to high temperatures. In several embodiments, cryogenic shielding can provide better shielding coverage. As soon as the cryogenic liquid contacts the nozzle, the cryogenic liquid instantly evaporates into cryogenic gas and expands. The inventors discovered that cryogenic gas provides better shielding coverage of the part than the gases previously used in the system of Figure 1. The liquid that does not evaporate stays liquid and contacts the part. Cryogenic shielding in accordance with some embodiments can reduce oxidation due to the fast quenching and cooling of the part and/or better shielding coverage.

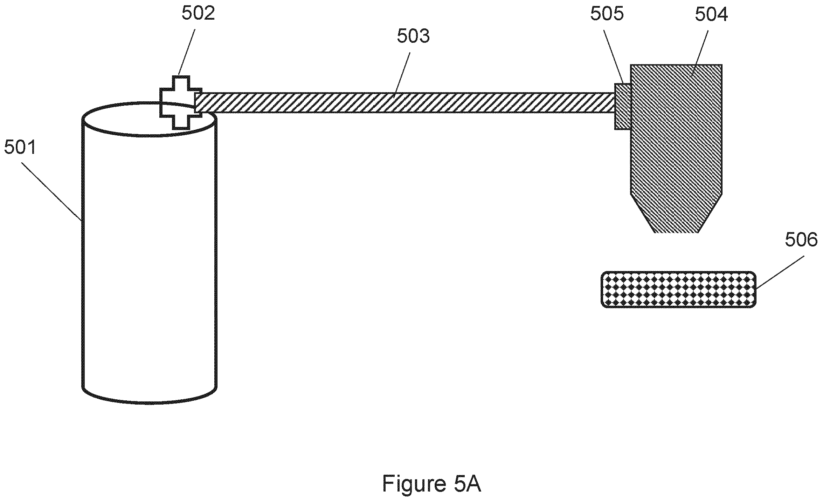

Figure 5A illustrates a cryogenic shielding setup for WAAM in accordance with an embodiment of the invention. A cryogenic storage unit 501 such as a cryogenic liquid cylinder or dewar can be used to supply the cryogenic source. The cryogenic storage unit 501 can have various sizes and can be made of various materials as appropriate to the requirements of specific applications. A cryogenic compatible tubing (or a cryogenic hose) 503 attached to the cryogenic specific valve 502 of the cryogenic cylinder can be used to transfer the cryogenic liquid from the tank 501 to the WAAM printing nozzle 504. In some embodiments, one or more cryogenic compatible tubings 503 can be used to transfer the cryogenic liquid. The cryogenic compatible tubing 503 can be selected to have a length and material composition as appropriate to the requirements of specific applications. The cryogenic specific valve 502 can be used to regulate flow. The cryogenic specific valve 502 can regulate the pressure of the cryogenic liquid to control the flow. The nozzle has an attachment 505 to connect to the cryogenic tubing 503. The attachment 505 can include threaded connections to connect to the cryogenic tubing 503. Thread connections such as the American National Pipe Tapered (NPT) thread can be used to provide mechanical and hydraulic seals. Additional jointing compound or Teflon tapes can be applied at the NPT thread to enhance the sealed connection. A variety of NPT sizes can be used as appropriate to the requirements of the specification. When the cryogenic liquid is in contact with room temperature, it evaporates and expands into gas. The nozzle 504 is placed above a substrate 506 to deposit materials on. In some embodiments, the cryogenic specific valves 502 can regulate the pressure in a range from about 10 psi to about 250 psi; or from about 10 psi to about 15 psi; or from about 15 psi to about 20 psi; or from about 20 psi to about 25 psi; or from about 25 psi to about 30 psi; or from about 30 psi to about 35 psi; or from about 35 psi to about 40 psi; or from about 40 psi to about 45 psi; or from about 45 psi to about 50 psi; or from about 50 psi to about 55 psi; or from about 55 psi to about 60 psi; or from about 60 psi to about 65 psi; or from about 65 psi to about 70 psi; or from about 70 psi to about 75 psi; or from about 75 psi to about 80 psi; or from about 80 psi to about 85 psi; or from about 85 psi to about 90 psi; or from about 90 psi to about 95 psi; or from about 95 psi to about 100 psi; or from about 100 psi to about 110 psi; or from about 110 psi to about 120 psi; or from about 120 psi to about 130 psi; or from about 130 psi to about 140 psi; or from about 140 psi to about 150 psi; or from about 150 psi to about 160 psi; or from about 160 psi to about 170 psi; or from about 170 psi to about 180 psi; or from about 180 psi to about 190 psi; or from about 190 psi to about 200 psi; or from about 200 psi to about 210 psi; or from about 210 psi to about 220 psi; or from about 220 psi to about 230 psi; or from about 230 psi to about 240 psi; or from about 240 psi to about 250 psi.

In several embodiments, the nozzle 504 has a pressure regulator to regulate the liquid and/or gas flow with a pressure less than or equal to the pressure of the cryogenic valve 502. In one example, the pressure regulator of the nozzle 504 has a pressure ranging from about 10 psi to about 50 psi; or from about 10 psi to about 15 psi; or from about 15 psi to about 20 psi; or from about 20 psi to about 25 psi; or from about 25 psi to about 30 psi; or from about 30 psi to about 35 psi; or from about 35 psi to about 40 psi; or from about 40 psi to about 45 psi; or from about 45 psi to about 50 psi.

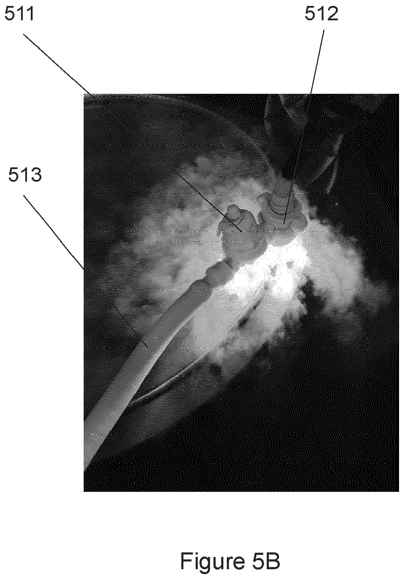

Figure 5B illustrates a WAAM printing nozzle attached to a cryogenic valve and a cryogenic tubing in accordance with an embodiment. The cryogenic pressure regulator 511, adjacent to the nozzle 512, connects the cryogenic tubing 513 to the nozzle 512. The cryogenic tubing 513 transfers the cryogenic source (not shown) to the pressure regulator 511 and the nozzle 512. The pressure regulator 511 can keep the cryogenic liquid and/or gas at a better controlled flow rate than without the valve. Because of the valve, the cryogenic liquid and/or gas are regulated at the nozzle instead of passively expanding inside the nozzle.

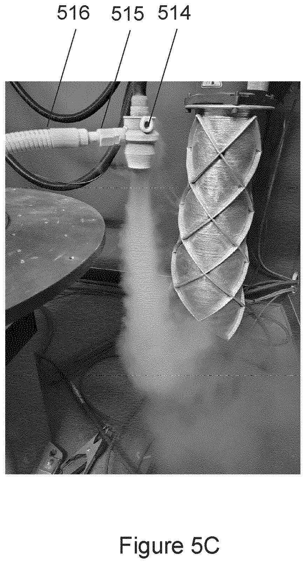

Figure 5C illustrates a WAAM printing nozzle attached to a cryogenic tubing in accordance with an embodiment. The nozzle 514 has an attachment 515 to be connected to the tubing 516. The nozzle can have a pressure regulating chamber to regulate the flow. The cryogenic liquid expands into gas at the tip of the nozzle, where a gas shroud can be seen.

Systems and methods for nozzles with specific configurations that can be utilized for cryogenic shielding and in applications that require shielding in accordance with various embodiments of the invention are discussed further below.

### Nozzles for Cryogenic Shielding

Cryogenic shielding in accordance with many embodiments can increase the continuous run time of the nozzle by providing adequate gas coverage and preventing spatter build-up from deposition. Some embodiments described herein provide an added advantage of easier cleaning of the nozzle due to the use of cryogenic shielding.

The nozzles in accordance with certain embodiments can be made of materials including: metals, metal alloys, copper, glass, ceramics, and any combinations thereof. In many embodiments, the nozzles can be made of a material that is different from the welding material. The difference in the material can allow temperature cycles the nozzle for spatter removal. In several embodiments, the nozzle can be made of a material comprising copper and the depositing material comprises aluminum. As copper and aluminum have different coefficient thermal expansion, cycling the nozzle at different temperatures can help remove the aluminum spatter on the copper nozzle.

Many embodiments use single cup nozzles and/or double cup nozzles for cryogenic shielding. (See, e.g., U.S. Patent Application Publication No. 2023/0398606, published December 14, 2023, the disclosure of which is incorporated by reference.) Cryogenic sources can be used for shielding with single cup nozzles. Some embodiments use room temperature shielding gas in the inner cup of the double cup nozzles, and cryogenic source in the outer cup of the double cup nozzles. Several embodiments use cryogenic sources in the inner and the outer cup of the double cup nozzles.

In many embodiments, the double cup nozzle is configured with concentric fluid flow channels for directing the flow of a first shielding source around a feed material. Embodiments have an inner channel that extends from an upper closed end near the proximal end of the nozzle that interfaces with the printing device. The inner channel extends along the length of the nozzle. The first shielding source can be flowed in the inner channel surrounding the feed material. The inner channel can be supported by one or more support fixtures that traverse the width of the channel and connect the exterior wall of the nozzle with an interior wall. In embodiments the inner channel is connected to the external surface of the external wall of the nozzle by one or more different holes. These holes can serve to direct the flow of a shielding source into the inner channel.

Several embodiments implement a secondary cup, or an outer cup, or an outer channel, or a secondary cylinder of the nozzle to increase shielding coverage. The secondary cup in accordance with some embodiments can have a shape of concentric or coaxial cylinder. In a number of embodiments, the inner channel or the central channel cylinder can be positioned within the inner diameter of the secondary cylinder. The cylinders of the central channel and the secondary cylinder are concentrically aligned.

The shielding source flow in the inner cup and the outer cup can have a pressure of less than about 15 psi; or from about 15 psi to about 20 psi; or greater than about 20 psi; or greater than about 50 psi; or greater than about 100 psi. In certain embodiments, the outer channel can have a lower velocity; or a similar flow velocity; or a higher flow velocity; compared to the velocity in the inner channel. In a number of embodiments, the flow in the outer channel and the flow in the inner channel can run continuously to provide shielding coverage for the nozzle during printing. In many embodiments, the flow velocity in various channels can be kept the same and/or different. The flow in the outer channel can be kept at a different flow rate compared to the flow rate in the central channel to keep the same flow velocities in the two channels in accordance with certain embodiments.

Embodiments are also configured with cryogenic specific housings that engage with the external wall of the nozzle. The cryogenic specific housing has an inlet that receives a cryogenic shielding source. In certain embodiments, the shielding source can be passed through the inlet into a pressure chamber or an expansion chamber. The pressure chamber is formed between an internal wall of the housing and the external wall of the nozzle. The pressure chamber is configured to engage with or cover each of the holes (also known as diffuser holes) that run through the external wall of the nozzle such that the shielding source can flow from the chamber into the inner channel of the nozzle.

In many embodiments, the nozzle can have a cylindrical shape with a circular cross section. In certain embodiments, the nozzle and/or nozzle assembly can have a central channel that has a shape of concentric or coaxial cylinder. In some embodiments, the inner cup can have a diameter from about 15 mm to about 20 mm; or less than about 15 mm; or greater than about 20 mm. In certain embodiment, the outer cup can have a diameter from about 27 mm to about 35 mm; or less than about 27 mm; or greater than about 35 mm. The outer cup can have an angle from about 160 degrees to about 170 degrees; or less than about 160 degrees; or greater than about 170 degrees.

Many embodiments include diffusers in the nozzle to reduce the velocity of shielding source internally (in the body) and reduce turbulence internally (in the body), or evenly distribute the gas in the secondary cup before exiting the nozzle. The diffusers can be placed in the inner cup and/or the secondary cup. The diffusers in accordance with various embodiments can have different configurations and include various numbers of rings. In several embodiments, the cross-sectional area of the diffuser rings can be increased to reduce the flow velocity. Alternatively, in embodiments that include one or more diffusers, such diffusers can maintain velocity or increase it. Exit velocity is dictated by the flow rate and cross-sectional area at the exit of the nozzle. Higher number of the diffuser rings and/or smaller size holes in the diffuser rings can increase the cross-sectional area. Examples of the diffusers can include (but are not limited to): 2-ring diffuser, 3-ring diffuser, 4-ring diffuser, 5-ring diffuser, 6-ring diffuser. Examples of the average diameter of the holes on the diffuser rings include (but are not limited to) about 1.5 mm; or less than about 1.5 mm; or greater than about 1.5 mm.

In several embodiments, the nozzle can have a conical shape. The angle of the cone of the nozzle can vary from about 15 degrees to about 20 degrees. In some embodiments, the nozzle can have a smooth contour to enhance the laminar flow.

Many embodiments described herein are directed to a printing nozzle capable of producing a second cryogenic shielding that surrounds a first shielding gas of the central channel or a first cryogenic shielding of the central channel. In several embodiments, a second cryogenic shielding gas can be produced using the secondary cup to increase the shielding coverage. In several embodiments, the shielding in the central channel and the secondary cup can provide coverage for the nozzle during printing. As can be appreciated, the shielding gases can be any suitable gas for the process. Some can be carbon dioxide, argon, helium, and/or oxygen. As can be appreciated, the cryogenic shielding sources can be any suitable cryogenic source for the process. Accordingly, in various embodiments, the first and second cryogenic source can be the same or different.

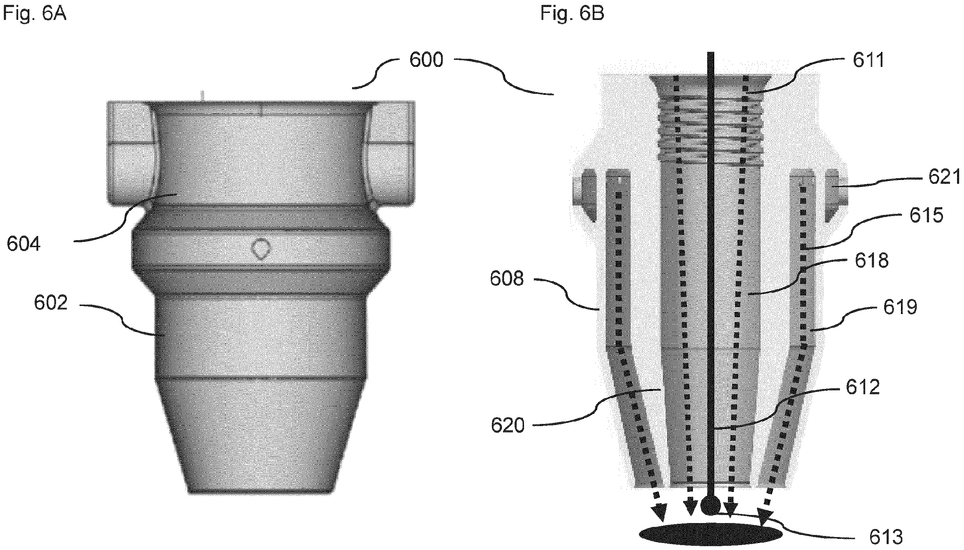

Figures 6A through 6C illustrate a two-cup nozzle in accordance with an embodiment of the invention. Figs. 6B illustrates a cross section view respectively of the nozzle in Fig. 6A. Figs. 6A through 6B illustrate a nozzle assembly 600 where the nozzle 602 and the housing 604 are joined or made from a single piece of material. The nozzle assembly 600 can provide a shielding source, either cryogenic or at room temperature to the inner channels 618. The nozzle assembly 600 has a chamber 621 to provide storage and transfer cryogenic shielding source to the outer channels 619. The outer channels 619 can be formed by the secondary cup.

The nozzle assembly 600 can have an inner channel 618 and an outer channel 619 positioned between an inner wall 620 and the outer wall 608 of the nozzle. The feed material 612 can be surrounded by the first shielding source 611 in the inner channel 618 and the second shielding source 615 in the outer channel 619. The shielding sources create a gas shroud around the feed material 612 and molten bead 613.

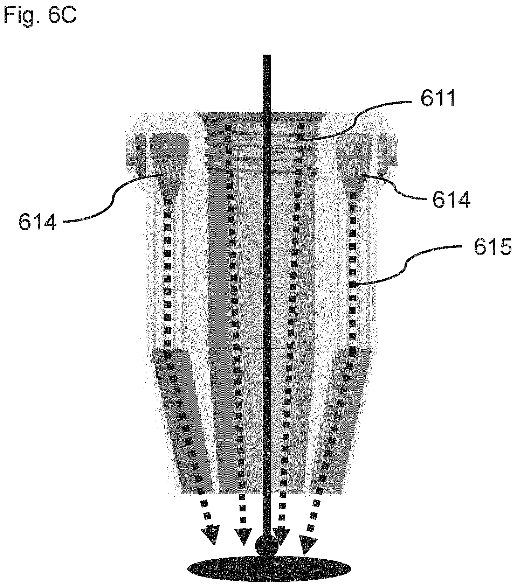

Figure 6C illustrates a two-cup nozzle with a diffuser in the outer cup in accordance with an embodiment. The diffusers 614 can modify the flow to be less turbulent when exiting the channels. In certain embodiments, the diffuser can include a series of holes in the outer cup. The holes of the diffuser can have an average diameter of about 1.5 mm; or about less than about 1.5 mm; or about greater than about 1.5 mm. and the diffuser holes for the out cup are offset as well.

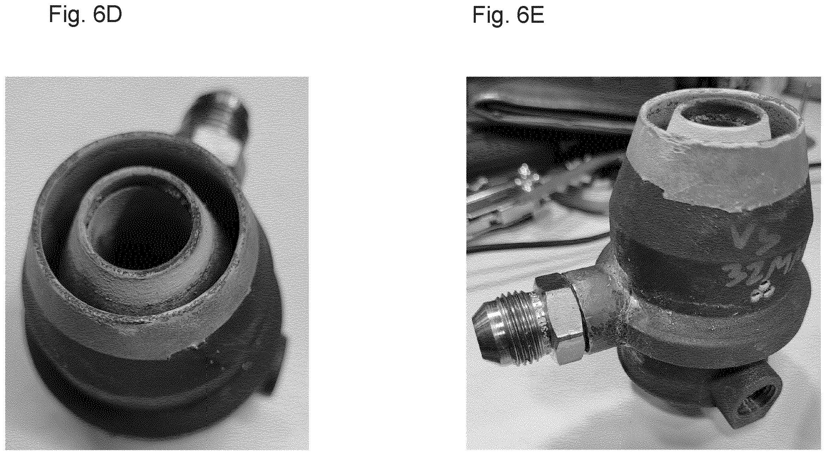

Figures 6D and 6E illustrate a two-cup nozzle for cryogenic shielding in accordance with an embodiment. Figure 6D shows a bottom view of the nozzle. Figure 6E shows a side view of the nozzle. The outer cup of the nozzle can have an attachment to connect with a cryogenic hose. The attachment can be 1/8 NPT (national pipe thread).

Although the various embodiments described herein are generally applicable to 3-D printing of metallic components, it can be appreciated that such embodiments can be applied to a variety of 3-D printing techniques. For example, embodiments can be adapted and used for WAAM and the various adaptations of WAAM. In accordance with embodiments, the printing nozzles described herein, having multiple flows of shielding gas, can be more conducive to utilizing more than one feed material wire into a printed part which can produce a higher quality printed part.

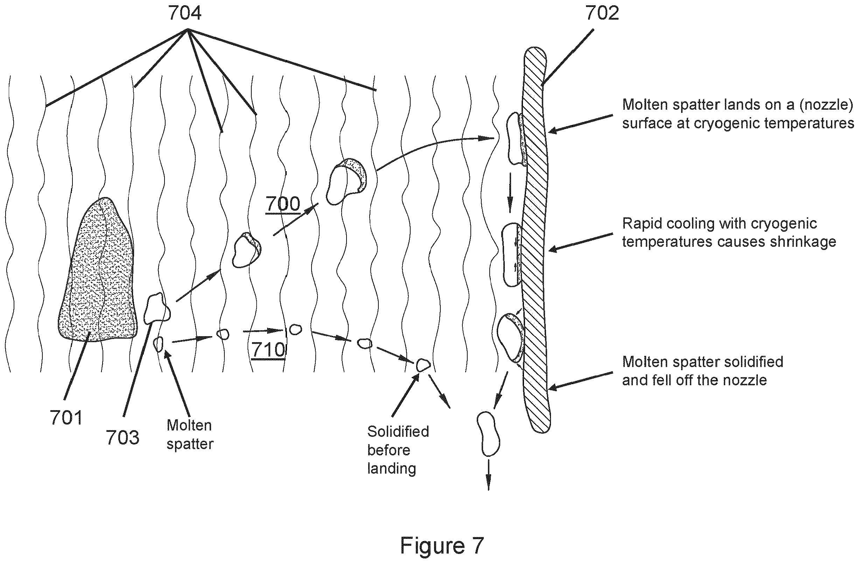

In many embodiments, cryogenic shielding can reduce spatter buildup in nozzles and/or contact tips. Cryogenic liquids and/or gases create a low temperature shielding around the arc near the tip of the nozzle. The low temperature cools the atmosphere between the arc and the print surface, as well as the print surface and the print part. The low temperature of the cryogenic liquids and/or gases keep the atmosphere and the print surface so cold that the spatter from depositing the molten material solidifies before landing on the walls and the contact tip of the nozzle. Figure 7 conceptually illustrates a schematic of a solidifying process of spatter in accordance with an embodiment of the invention. Figure 7 shows two possible processes 700 and 710 that cryogenic shielding can prevent molten spatter build up in nozzles in accordance with an embodiment. The arc 701 melts the feed wire (not shown) and creates a molten material 703. Cryogenic shielding 704 surrounds the atmosphere between the arc and the print surface (not shown) and between the arc and the nozzle 702. The cryogenic shielding 704 extends the covering to the print part. The cryogenic gas and/or liquid keep the temperature of the nozzle lower than or equal to about 83 Kelvin (or about -190 °C; or about -310 °F). As the molten material and the spatter as a result of the printing contact the cryogenic shielding 704, they solidify quickly due to the low temperature and drop before landing onto the nozzle (process 710). Some of the molten spatter 703 may land on the nozzle 702. But as the nozzle 702 is kept at a low temperature, the molten spatter can be rapidly cooled and shrink in size and fall off the nozzle 702 (process 700). The solidified spatter and the excessive molten material fall off before sticking to the walls and contact tip of the nozzle and the print surface. Alternatively, if the material sticks to the wall as it cools down rapidly it will contract due to its coefficient of thermal expansion and pop off the nozzle.

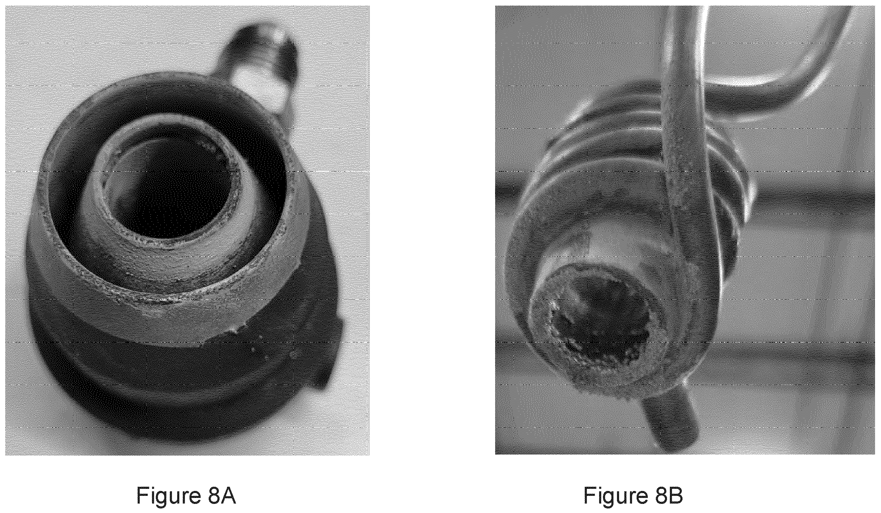

Figure 8A illustrates a 2-cup nozzle after about 6 hours of printing with cryogenic shielding in accordance with an embodiment. As can be seen in Figure 8A, the nozzle shows minimal spatter build up on the nozzle walls and contact tip after consecutive printing for about 6 hours.

Figure 8B illustrates a nozzle after printing with room temperature argon shielding for a period of time. Spatter build up can be seen inside the nozzle.

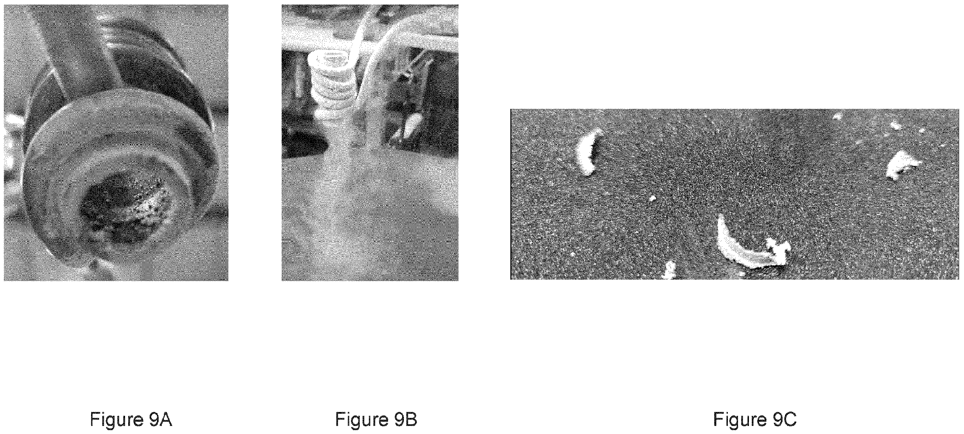

In several embodiments, cryogenic shielding enables easy spatter removal. Nozzles in printing are normally heated to a temperature around 150 °C. Flash freezing the hot nozzle with cryogenic gas and/or liquid at a temperature of lower than about -190 °C contracts the nozzle and makes spatter removal easy. Figures 9A - 9C illustrate a spatter removal process using cryogenic source in accordance with an embodiment of the invention. Figure 9A shows a copper nozzle with a large amount of spatter buildup in the center after welding. The nozzle is gently warmed to about 150 °C to simulate weld temperatures. Figure 9B shows the nozzle being flash frozen with liquid nitrogen to a temperature lower than about -190 °C in accordance with an embodiment. The drastic temperature change contracts the nozzle. Figure 9C shows the spatter falls out after gently tapping the nozzle in accordance with an embodiment.

Systems and methods for improving print qualities as a result of cryogenic shielding in accordance with various embodiments of the invention are discussed further below.

### Properties of the Printed Part with Cryogenic Shielding

Cryogenic shielding in accordance with many embodiments can cool the printed article quickly and reduce heat accumulation in the article. The printed parts with cryogenic shielding have improved geometries and mechanical properties compared to regular shielding. As WAAM is a thermal process, how the heat dissipates and accumulates can affect print quality. Due to the heat accumulation and complex thermal conditions of WAAM, dimensional accuracy of printed part may be difficult to control, particularly for large parts. The transfer of heat to the already deposited layers can be of great concern as it affects the cooling rate and thermal cycles of both the previously and currently deposited layers, which can lead to microstructural and geometrical changes along the part. Continuous deposition without inter-pass cooling can produce excessive heat input in a local region, resulting in high temperatures and wide re-melting, resulting in poor dimensional accuracy and surface finish. Many embodiments include the inventive realization that cryogenic shielding improves part accuracy and/or reduces porosity of the printed part (compared to parts printed without cryogenic shielding). The inventors believe that the improved properties are due to the fast cooling process. In addition, without the cooling described in this disclosure, small features using materials with insufficient heat conductivity cannot be printed without print interruptions. The inventions described in this disclosure facilitate printing these features without print interruptions or with substantially no print interruptions.

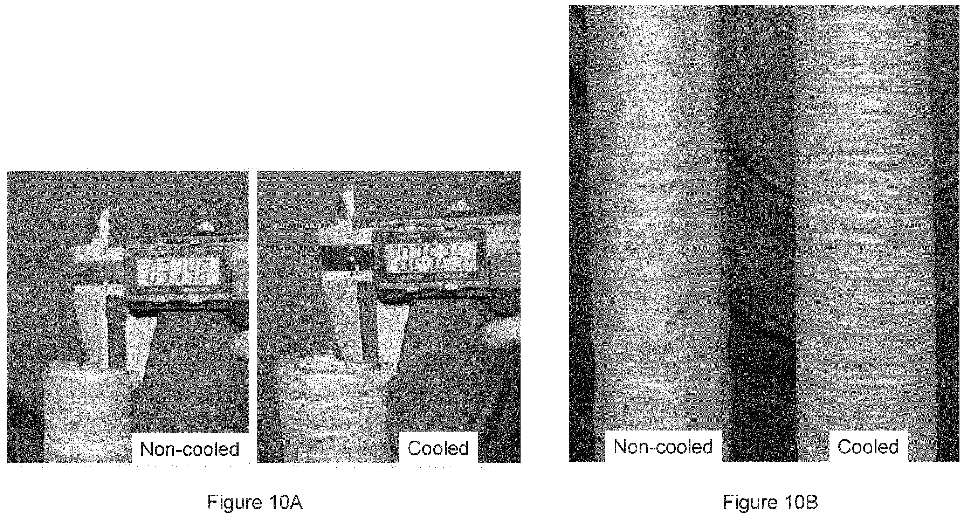

Printed parts with cryogenic shielding in accordance with many embodiments have thinner walls with taller bead height (higher build rate) and can maintain more defined layers. Printed articles with room temperature gas shielding have thicker walls, and show signs of overheating on the surface. Figures 10A - 10B illustrate a comparison between printed parts using cryogenic shielding and regular shielding in accordance with an embodiment. The parts shown in Figures 10A and 10B are printed using the same process and parameters except that the cooled parts use cryogenic argon shielding while the non-cooled parts use room temperature argon gas shielding. The printed parts have dimensions of about 30 inches in height, about 2.5 inches diameter at base tapered to about 1.25 inches diameter at top. As shown in Figure 10A, the cooled part has a wall thickness of about 0.25 inch and the non-cooled part has a wall thickness of about 0.31 inch. In Figure 10B, the cooled part shows more defined deposition layers. The non-cooled part shows signs of overheating on the surface. Figures 10A and 10B illustrate that parts printed with cryogenic shielding can be manufactured with higher deposition rates than those printed without, and the inventors believe that such increased deposition rates are due to an improved heat sink and improved wall thicknesses consistency.

Cryogenic shielding for WAAM in accordance with several embodiments may impact various properties of the print object. Examples of the properties include grain size, residual stress, heat treatment sensitivity, and porosity.

### EXAMPLE EMBODIMENTS

The following examples are put forth so as to provide those of ordinary skill in the art with a description of how to make and use the present invention, and are not intended to limit the scope of what the inventors regard as their invention nor are they intended to represent that the experiments below are all or the only experiments performed. Efforts have been made to ensure accuracy with respect to numbers used (e.g., amounts, temperature, etc.) but some experimental errors and deviations should be accounted for.

### Example 1: Cryogenic Argon Shielding

Various setups can be used for cryogenic shielding in WAAM in accordance with many embodiments. Some embodiments siphon cryogenic liquid argon (or nitrogen) and let it transition to gaseous state in hose used to transport the argon (or nitrogen) from storage to end effector. Several embodiments use vortex tube to cool down gaseous argon (or nitrogen) right before the end effector. Certain embodiments create liquid nitrogen heat exchanger through which gaseous argon is transported to cool down the argon.

Many embodiments implement a double cup nozzle for cryogenic shielding. A room temperature argon gas can be used for shielding in the inner cup and a cryogenic argon (liquid and gas) can be used in the outer cup. The outer shielding cup of the double cup nozzle can be connected to the liquid argon cylinder via a cryogenic hose. The outer cup of the nozzle can have a 1/8 NPT (national pipe thread) to accept the cryogenic hose. Flow can be adjusted by opening the liquid argon cylinder (dewar) valve till droplets of liquid argon exit the gas nozzle. During the print the dewar valve can be constantly adjusted to the point of slight argon drips through the outer cup of the nozzle. The system is allowed to cool down to steady state. The coolant system of WAAM printer may be turned off because the overall chill of the nozzle may freeze the interior coolant lines of the torch. The inventors discovered that, during the print, excess liquid argon flow does not extinguish the arc.

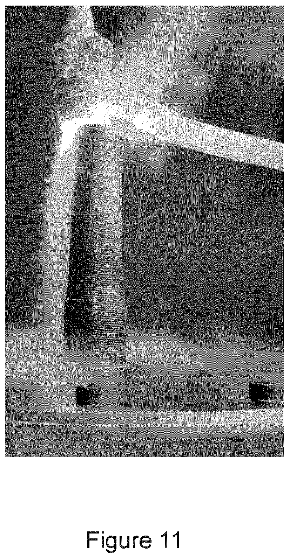

Figure 11 illustrates a WAAM print process with cryogenic argon shielding in accordance with an embodiment. The wire feed speed (WFS) can range from about 120 ipm (inches per minute) to about 100 ipm. The printed articles have dimensions of about 30 inches in height, about 2.5 inches diameter at base tapered to about 1.25 inches diameter at top.

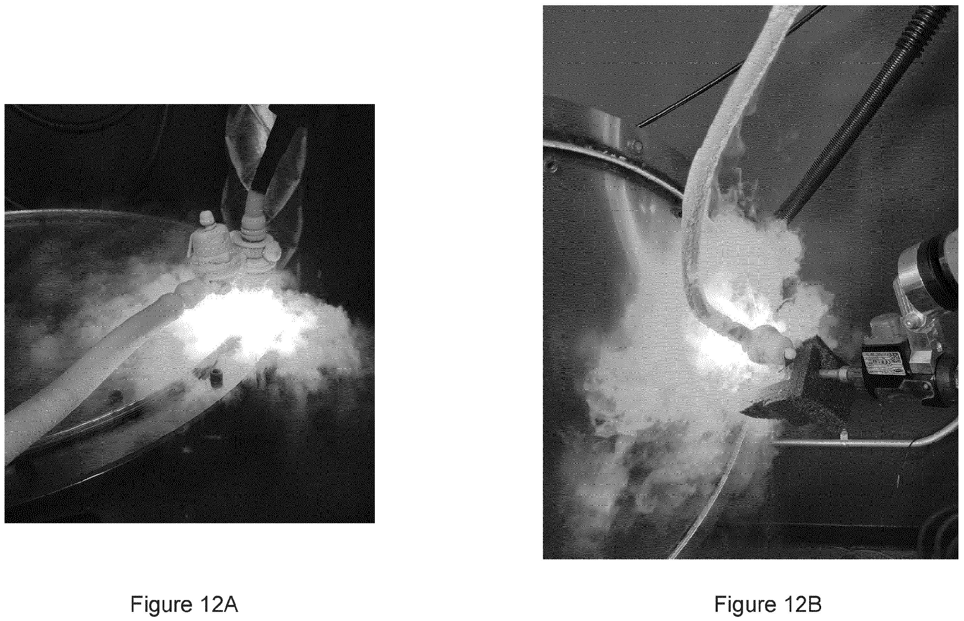

Figures 12A - 12B illustrate cryogenic shielding in vertical orientation printing (i.e., the printed part extends in a vertical direction with the substrate parallel to the floor) and in horizontal orientation printing (i.e., the printed part extends in a horizontal direction and parallel to the floor from a vertically positioned substrate) respectively in accordance with an embodiment.

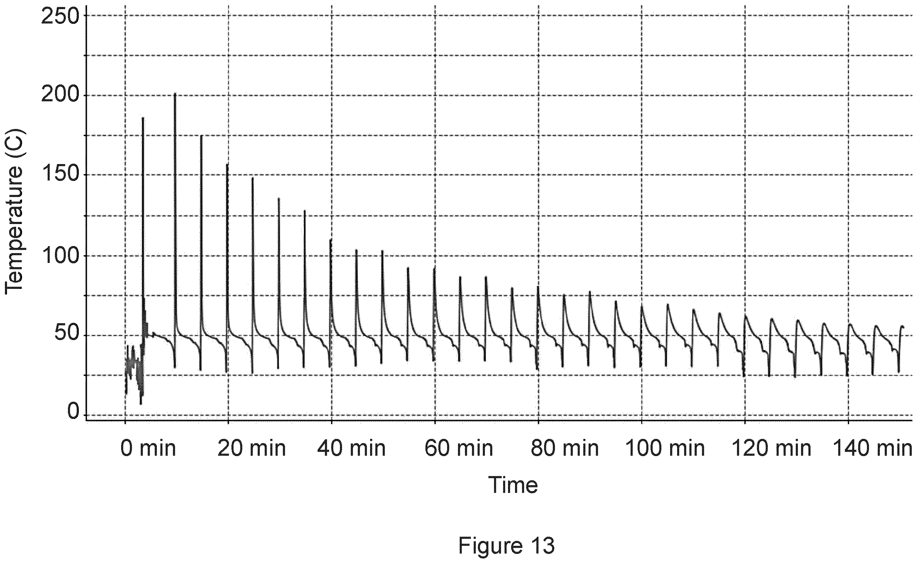

Figure 13 illustrates temperatures of the print part during a print using cryogenic shielding in accordance with an embodiment. To gather these data, a hole of about 1 mm in diameter was drilled 1 layer below the print surface. A type K thermocouple was inserted into the hole. The surface above the hole was tapped with a hammer to ensure good contact with the thermocouple.

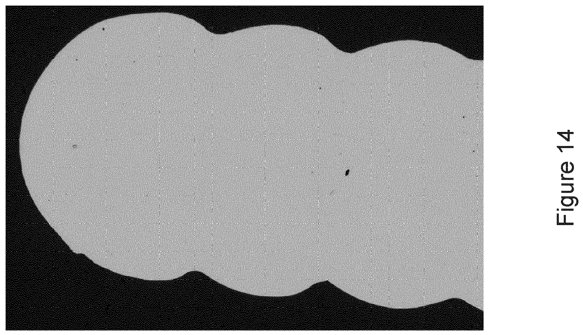

Figure 14 illustrates a microscopic image of printed article with cryogenic argon shielding in accordance with an embodiment. The articles were WAAM printed with aluminum alloy 5183 with a thickness of about 0.15 inch. As Figure 14 shows, the printed part has minimal porosity.

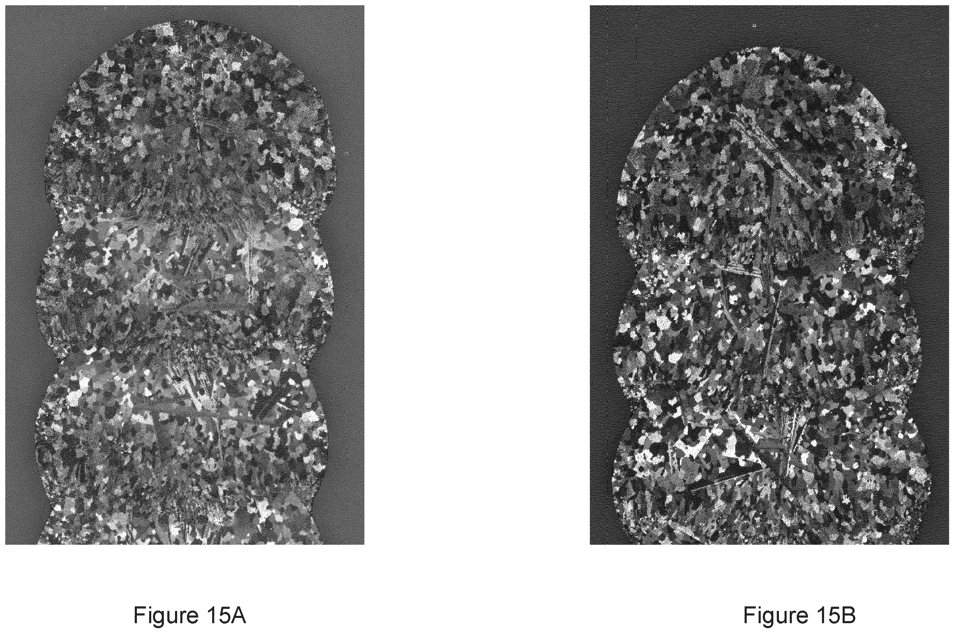

Figures 15A - 15B illustrate images of microstructures of printed article in accordance with an embodiment. The articles are WAAM printed with aluminum alloy 5183 with a thickness of about 0.15 inch. Figure 15A shows microstructures of a printed part with cryogenic argon shielding. Figure 15B shows microstructures of a printed part with regular argon shielding.

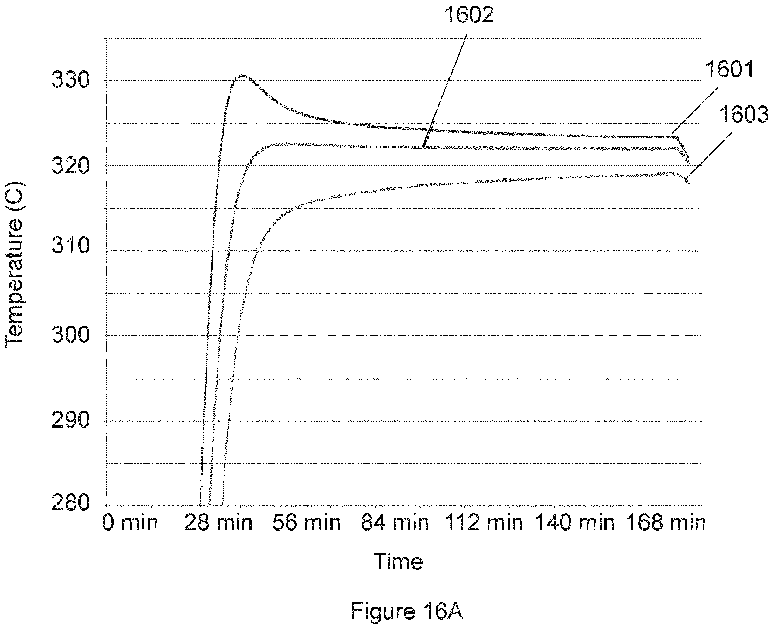

Figure 16A illustrates heat treatment of a printed part with cryogenic argon shielding in accordance with an embodiment. The part is printed with an aluminum alloy and has a thickness of about 0.5 inch. Figure 16A shows the temperatures of the top front left 1601, the middle center 1602, and the bottom front right 1603. The middle center position has a temperature of about 322 °C.

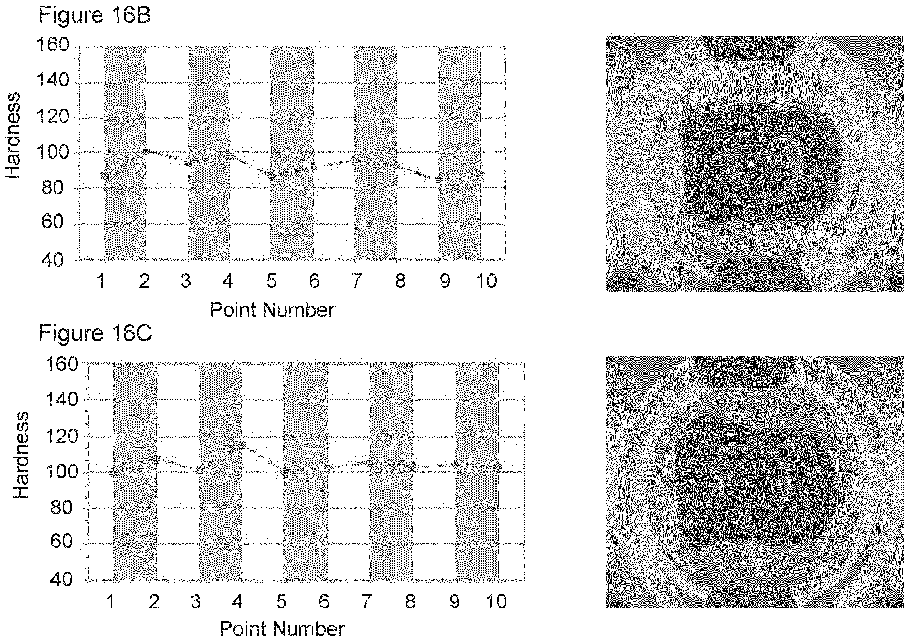

Figures 16B - 16C illustrate microhardness of a printed article with cryogenic argon shielding, as printed and heat treated respectively, in accordance with an embodiment. As can be seen, the heat-treated part in Figure 16C has a higher and more uniform hardness through the sample area.

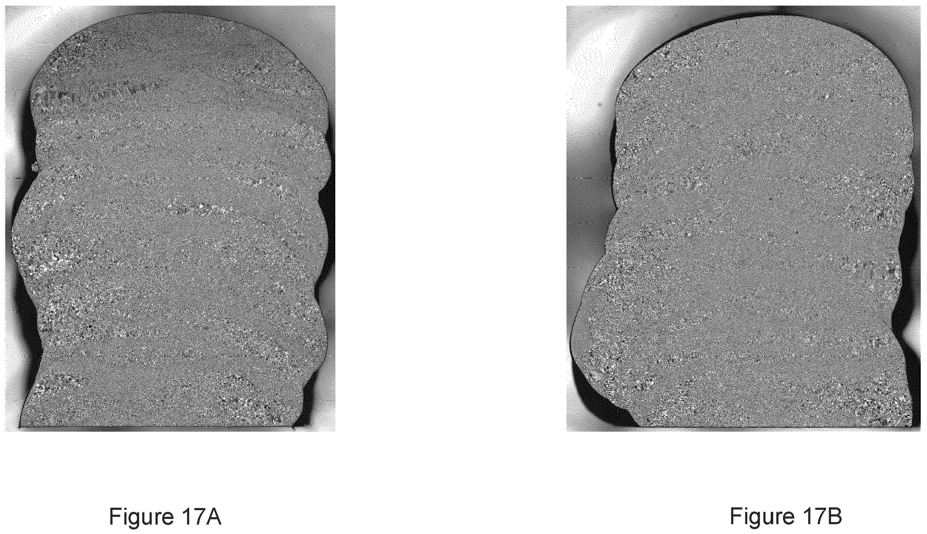

Figures 17A -17B illustrate microscopic images of a printed part with cryogenic argon shielding, as printed and heat treated respectively, in accordance with an embodiment. The as printed sample in Figure 17A and the heat-treated sample in Figure 17B show minimal porosity. The heat-treated sample shows more fine structures.

### Example 2: Active Cryogenic Part Cooling

In at least some embodiments, a cryogenic source can be used to cool a printed part without using the cryogenic source for shielding the arc. Compared to parts printed without utilizing a cryogenic source (either for active part cooling or for shielding the arc), parts printed with active part cooling from a cryogenic source achieve improved material properties, such as increased hardness, and/or reduced porosity. Because the part stays cooler, wire feed speed can be increased, leading to higher deposition rates compared to parts manufactured without active cryogenic part cooling. In addition, without the cooling described in this disclosure, small features using materials with insufficient heat conductivity cannot be printed without print interruptions. The inventions described in this disclosure facilitate printing these features without print interruptions or with substantially no print interruptions. In this disclosure, active part cooling refers to cooling of a printed part, accelerated over passive heat dissipation, utilizing a cryogenic source.

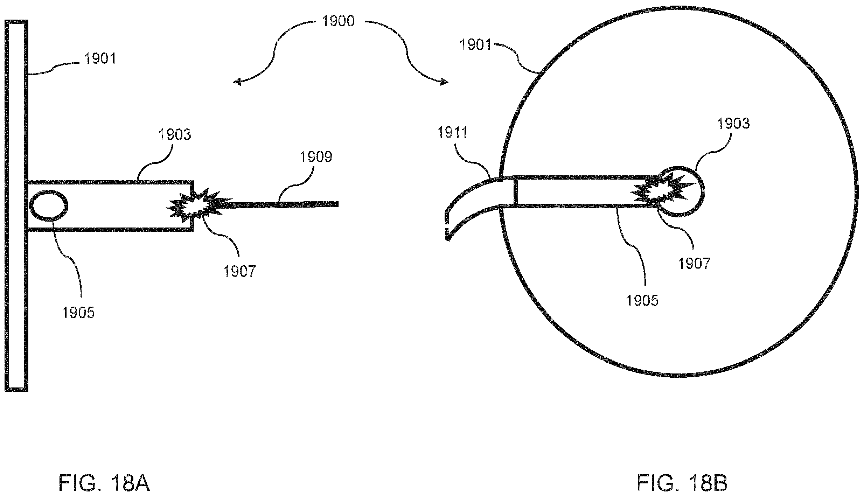

Figure 18A shows a schematic side plan view of an additive manufacturing system 1900 that incorporates active cryogenic part cooling. Figure 18B shows a front plan view of the additive manufacturing system 1900. The additive manufacturing system includes a substrate 1901 and a torch 1909, which creates an arc 1907 for forming a part 1903. A vacuum-sealed hose (Figure 18B, 1911) with an opening on the end directs a cryogenic source to a padded nozzle (Figure 18A, 1905) pointed at the base of the part. The foregoing configuration positions the cryogenic source away from the arc, so it is not used for its arc shielding properties and instead is used for active part cooling.

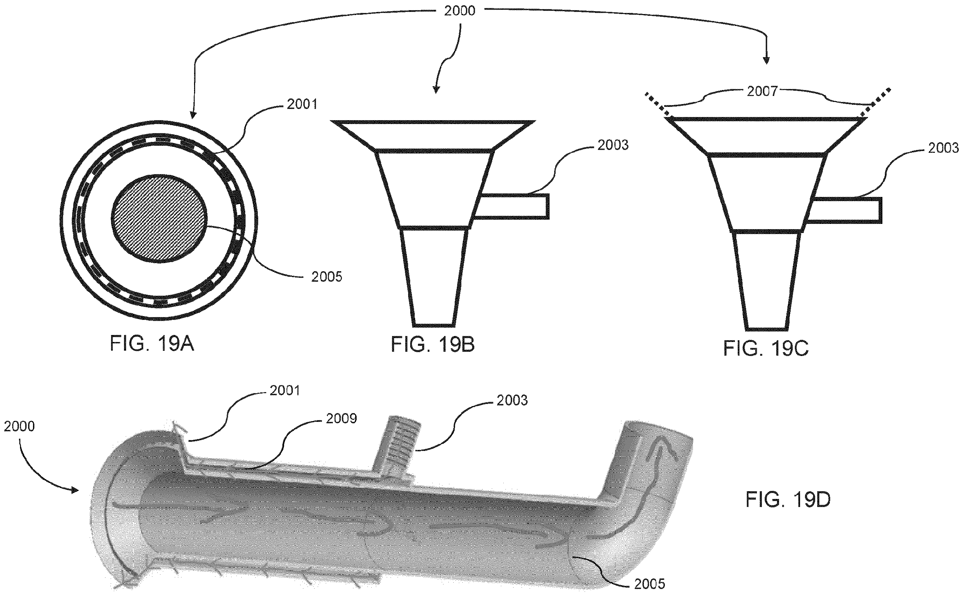

Figure 19A shows a schematic top plan view of a nozzle 2000 for providing a cryogenic source for active part cooling. The nozzle 2000 includes circumferential holes 2001 near an end of the nozzle and a central bore 2005. Figure 19B shows a schematic side plan view of the nozzle 2000. An inlet 2003 connects to a cryogenic source via tubing (not shown). Figure 19C shows the schematic side plan view of the nozzle of Figure 19B when the nozzle is in use. Cryogenic source 2007 sprays out at about a 45-degree angle.

When in use in an additive manufacturing system, the nozzle 2000 is positioned so that the circumferential holes (Figure 19A, 2001) are inside a printed part and the opposite end extends out of the printed part, e.g., toward the arc.

As shown in Figure 19D, when in use, the cryogenic source flows through the inlet channel 2003 and into a circumferential chamber 2009 concentric with the central bore 2005. The circumferential holes 2001 are the outlet of the circumferential chamber 2009. Cryogenic gas returns and is removed from the additive manufacturing system through the central bore 2005. In this way, the central bore acts as an exhaust that contains the gas and prevents the gas from flowing backwards towards the arc along the part interior walls. Accordingly, the circumferential holes 2001 can be sized and positioned to cause the cryogenic source to spray at about a 45-degree angle towards the surrounding part. This configuration can desirably force the vapor to escape primarily out the central bore 2005, separating the gas from the arc, instead of moving to the arc along the printed part's inner walls.

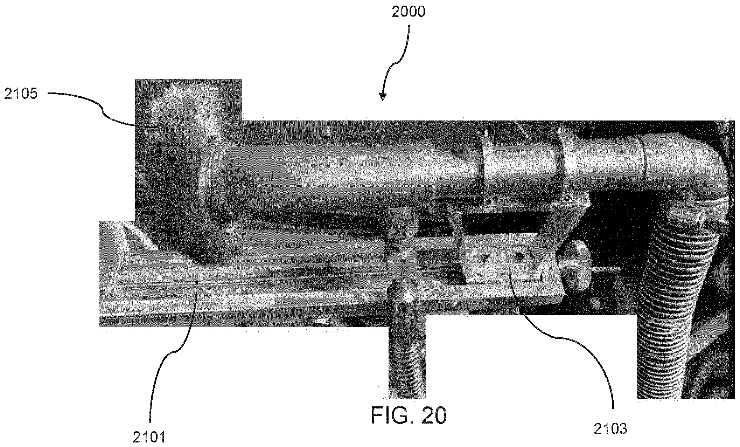

Figure 20 shows an alternative configuration of the nozzle of Figures 19A-19D. The nozzle of Figure 20 includes a bracket 2103 that slidably engages with a track 2101. The bracket 2103 and track 2101 allow the nozzle to slide out as the additively manufactured part grows, so that the end of the nozzle can be positioned closer to the arc, which is the source of heat. The configuration of Figure 20 also includes a spray guard 2105. The spray guard 2105 shown is a metal wire brush. It is sized and configured to prevent cryogenic liquid that is not vaporized from flowing back toward the arc along the part walls. In this configuration, the spray guard 2105 is sized and configured to snugly abut against the part walls. Embodiments do not need to include both the bracket/track and the spray guard to be within the scope of the invention.

### Example 3: Active Weld Puddle Cooling

In at least some embodiments, a cryogenic source can be used to cool the weld puddle substantially without interfering with the arc. Compared to parts printed without utilizing a cryogenic source (either for active part cooling or for shielding the arc), parts printed with active weld puddle cooling from a cryogenic source achieve improved material properties, such as increased hardness, and/or reduced porosity. Because the weld puddle cools more quickly, wire feed speed can be increased, leading to higher deposition rates compared to parts manufactured without active cryogenic weld puddle cooling. In addition, without the cooling described in this disclosure, small features using materials with insufficient heat conductivity cannot be printed without print interruptions. The inventions described in this disclosure facilitate printing these features without print interruptions or with substantially no print interruptions. In this disclosure, active weld cooling refers to cooling of a molten weld puddle, accelerated over passive heat dissipation, utilizing a cryogenic source.

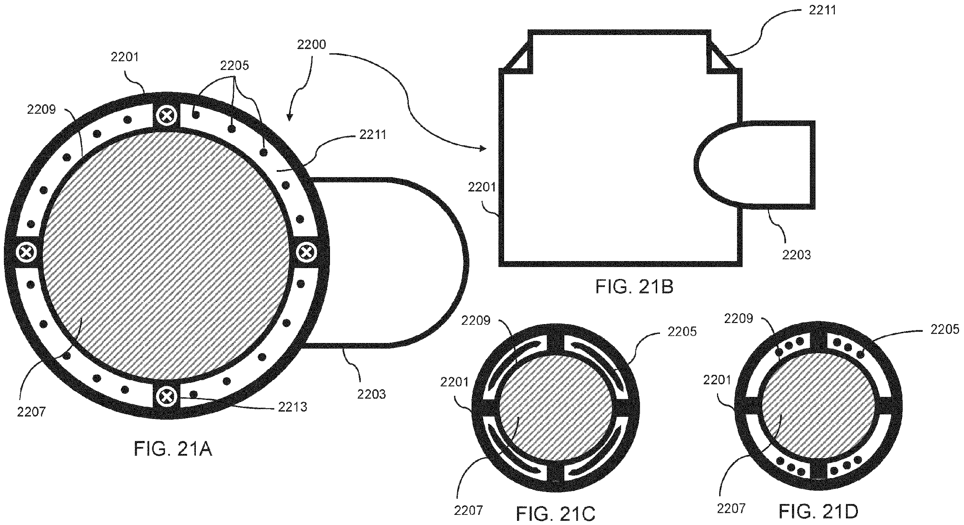

Figure 21A shows a schematic top plan view of a nozzle 2200 configured to surround a welding torch and direct a cryogenic source to a weld puddle. The nozzle 2200 includes a body 2201 and an inlet 2203. The central bore 2207 is sized and positioned to fit around a welding torch (not shown). The cryogenic source flows in through the inlet 2203 (via, e.g., a suitable hose, not shown) and through an interior circumferential chamber between the outer wall of the body 2201 and the inner wall 2209 of the central bore 2207. The circumferential chamber is similar to the circumferential chamber 2009 shown in Figure 19D. Returning to the discussion of Figure 21A, the cryogenic source sprays out through holes 2205 forming the outlet of the circumferential chamber.

Figure 21B shows a schematic side plan review of the nozzle 2200 of Figure 21A. In this example, the holes (Figure 21A, 2205) are positioned in a ring 2211 seated on the body 2201. The ring 2211 and the body 2201 can be two joined components, optionally separable, or formed as one unitary piece of monolithic material, e.g., by 3D printing or casting brass or other suitable metal. In the example shown, the ring 2211 is joined to the body 2201 by screws 2213, so that the two components are separable. Unlike the central bore 2005 in the nozzle 2000 of Figure 19D, the central bore 2207 of Figure 21A does not carry gas away from the arc. As noted above, the central bore 2207 of Figure 21A surrounds the torch so that the holes 2205 are close to the arc, and therefore the weld puddle. In this way, the cryogenic source (primarily liquid cryogen) is directed toward the surface of the print immediately surrounding the arc, which rapidly cools the puddle without substantially interfering with the arc.

Figures 21C and 21D show alternative configurations of the body 2201, central bore 2207, inner wall 2209, and holes 2205, compared with Figure 21A. As shown, in Figure 21C, the holes need not be circular. In this example, the holes 2205 are elongated arcs. Again, looking from the top down, the region below the elongated arc holes is the circumferential chamber. In this embodiment, the ring 2211 can be omitted so that the openings are integral with the body 2201. In Figure 21D, the holes do not extend around the entire circumference of the ring 2211. Instead, they are grouped in the area of the ring 2211 that, in use, is adjacent the advancing and trailing edge of the weld puddle (as the weld puddle advances along the part) and omitted in the area of the ring 2211 that, in use, is adjacent the sides of the weld puddle. The inventors discovered that omitting holes to direct the cryogenic source primarily on two side of the arc, rather than all the way around results in better focus and improved cooling in hotter areas. The resulting weld profile has been shown to be more uniform with this configuration.

The inventors discovered that the angle of the holes impacts the degree to which cryogenic gas bounces off the printed part, returns through the central bore 2207, and interferes with the arc. The inventors observed that angling the holes at a 10-degree angle had adequate cooling and that the source was delivered primarily as vapor, with only fine droplets of liquid. Nevertheless, returned vapor was observed to interfere with the arc. The inventors observed that angling the holes at a 25-degree angle resulted in no or substantially no interference with the arc. Accordingly, certain embodiments include inventively angling the holes at greater than 10 degrees, or thereabout; greater than or equal to 20 degrees, or thereabout; greater than or equal to 30 degrees, or thereabout; greater than or equal to 40 degrees, or thereabout; and 45 degrees or thereabout. Sub-ranges (such as 10-20 degrees, 10-25 degrees, 20-25 degrees, 20-30 degrees, 25-35 degrees, 10-35 degrees, etc.) and individual datapoints within these ranges (such as 11, 12, 13, ... 42, 43, 44, and 45 degrees or thereabout) are also contemplated.

As developed above, this disclosure encompasses using cryogenic sources for shielding, active part cooling, and active weld puddle cooling during an additive manufacturing process. These inventive aspects are not necessarily alternatives to each other. Rather, they can be used in a complementary fashion:
- Shielding alone
- Active part cooling along
- Active weld puddle cooling alone
- Shielding and active part cooling
- Shielding and weld puddle cooling
- Active part cooling and active weld puddle cooling
- Shielding, active part cooling, and active weld puddle cooling.

To be clear, embodiments can utilize cryogenic shielding without active part cooling, such that cooling results from the shielding or from natural dissipation but not from providing a cryogenic source that is not intended to shield the arc.

### DOCTRINE OF EQUIVALENTS

This description of the invention has been presented for the purposes of illustration and description. It is not intended to be exhaustive or to limit the invention to the precise form described, and many modifications and variations are possible in light of the teaching above. The embodiments were chosen and described in order to best explain the principles of the invention and its practical applications. This description will enable others skilled in the art to best utilize and practice the invention in various embodiments and with various modifications as are suited to a particular use. The scope of the invention is defined by the following claims.

As used herein, the singular terms "a," "an," and "the" may include plural referents unless the context clearly dictates otherwise. Reference to an object in the singular is not intended to mean "one and only one" unless explicitly so stated, but rather "one or more."

In this disclosure, the words "including," "such as," "e.g.," and related terms are not closed-ended and should be interpreted as having the explanatory language "but not limited to." Likewise, the term "include" is not closed-ended and should be interpreted such that what proceeds is not limiting on the term that precedes.

As used herein, the terms "approximately" and "about" are used to describe and account for small variations. When used in conjunction with an event or circumstance, the terms can refer to instances in which the event or circumstance occurs precisely as well as instances in which the event or circumstance occurs to a close approximation. When used in conjunction with a numerical value, the terms can refer to a range of variation of less than or equal to ± 10% of that numerical value, such as less than or equal to ±5%, less than or equal to ±4%, less than or equal to ±3%, less than or equal to ±2%, less than or equal to ±1 %, less than or equal to ±0.5%, less than or equal to ±0.1 %, or less than or equal to ±0.05%.

Additionally, amounts, ratios, and other numerical values may sometimes be presented herein in a range format. It is to be understood that such range format is used for convenience and brevity and should be understood flexibly to include numerical values explicitly specified as limits of a range, but also to include all individual numerical values or sub-ranges encompassed within that range as if each numerical value and sub-range is explicitly specified. For example, a ratio in the range of about 1 to about 200 should be understood to include the explicitly recited limits of about 1 and about 200, but also to include individual ratios such as about 2, about 3, and about 4, and sub-ranges such as about 10 to about 50, about 20 to about 100, and so forth.

Examples are set out in the following clauses:
1. An additive manufacturing system, comprising:
   a print head comprising a nozzle, wherein the nozzle is configured to receive a feedstock from a proximal end;
   wherein an arc is configured to melt the feedstock at a distal end of the nozzle such that the molten feedstock may be deposited on a substrate in a layer-by-layer fashion to form a part;
   wherein the nozzle is configured to receive a cryogenic source from the proximal end thereof; and
   wherein, when in use, the cryogenic source expands in volume when in contact with the nozzle such that the expanded cryogenic source shields the arc and the molten feedstock and cools the substrate during printing.
2. The system of clause 1, wherein the nozzle comprises a material with a higher melting temperature than the feedstock.
3. The system of clause 2, wherein the expanded cryogenic source solidifies a spatter comprising the molten feedstock such that the spatter substantially resists attaching to the nozzle.
4. The system of any preceding clause, wherein the nozzle comprises copper and the feedstock comprises aluminum.
5. The system of any preceding clause, further comprising a cryogenic storage tank and a cryogenic hose to supply the cryogenic source to the nozzle.
6. The system of any preceding clause, wherein the nozzle comprises a first channel and a second channel adjacent to and separate from the first channel, wherein the first channel is configured to receive the cryogenic source and the second channel is configured to receive a second cryogenic source.
7. The system of any of clauses 1 to 5, wherein the nozzle comprises a first channel and a second channel adjacent to and separate from the first channel, wherein the first channel is configured to receive a shielding gas and the second channel is configured to receive the cryogenic source.
8. The system of clause 7, wherein the shielding gas comprises argon, helium, carbon dioxide, nitrogen, hydrogen, neon, xenon, or a combination thereof.
9. The system of any preceding clause, wherein the cryogenic source comprises cryogenic liquid argon, cryogenic liquid nitrogen, cryogenic liquid helium, cryogenic liquid neon, cryogenic liquid oxygen, cryogenic liquid xenon, cryogenic argon gas, cryogenic nitrogen gas, cryogenic helium gas, cryogenic neon gas, cryogenic oxygen gas, cryogenic xenon gas, cryogenic air, or a combination thereof.
10. The system of any preceding clause, wherein the cryogenic source has a temperature lower than or equal to -190 °C.
11. A method for shielding in additive manufacturing, comprising:
   feeding a wire feedstock through a nozzle;
   melting the wire feedstock with an arc at a distal end of the nozzle;
   depositing the molten feedstock on a substrate in a layer-by-layer fashion to form a part; and
   feeding a cryogenic source through the nozzle, such that the cryogenic source expands in volume when in contact with the nozzle and the expanded cryogenic source shields the arc and the molten feedstock.
12. The method of clause 11, wherein the nozzle comprises a material with a higher melting temperature than the feedstock.
13. The method of clause 12, wherein the expanded cryogenic source solidifies a spatter comprising the molten feedstock such that the spatter substantially resists attaching to the nozzle.
14. The method of any of clauses 11 to 13, wherein the nozzle comprises copper and the feedstock comprises aluminum.
15. The method of any of clauses 11 to 14, feeding the cryogenic source from a cryogenic storage tank and a cryogenic hose to the nozzle.
16. The method of clause 15, the cryogenic storage tank further comprises a cryogenic regulator valve to control a flow of the cryogenic source.
17. The method of any of clauses 11 to 16, further comprising feeding the cryogenic source through a first channel of the nozzle and feeding a second cryogenic source through a second channel of the nozzle that is adjacent to and separated from the first channel of the nozzle.
18. The method of any of clauses 11 to 16, further comprising feeding a shielding gas through a first channel of the nozzle and feeding the cryogenic source through a second channel of the nozzle that is adjacent to and separated from the first channel of the nozzle.
19. The method of clause 18, wherein the shielding gas is selected from the group consisting of: argon, helium, carbon dioxide, nitrogen, hydrogen, neon, xenon, and combinations thereof.
20. The method of any of clauses 11 to 19, wherein the cryogenic source is selected from the group consisting of: cryogenic liquid argon, cryogenic liquid nitrogen, cryogenic liquid helium, cryogenic liquid neon, cryogenic liquid oxygen, cryogenic liquid xenon, cryogenic argon gas, cryogenic nitrogen gas, cryogenic helium gas, cryogenic neon gas, cryogenic oxygen gas, cryogenic xenon gas, cryogenic air, and combinations thereof.
21. The method of any of clauses 11 to 20, wherein the cryogenic source has a temperature lower than or equal to -190 °C.
22.A printing nozzle comprising:
   an inner channel defined within a body and extending a length of the body from a proximal end configured to receive a feedstock and a shielding gas and to a distal end that, when the printing nozzle is in use, is proximal a welding arc configured to melt the feedstock, and
   an outer channel concentrically located exterior to the inner channel and defined between the body and a housing, the outer channel configured to receive a cryogenic source that is distinct from the shielding gas and pass the cryogenic gas to a region adjacent the welding arc.
23. The nozzle of clause 22, wherein the nozzle is formed from a material with a higher melting temperature than the feedstock.
24. The nozzle of clause 22 or 23, wherein the nozzle comprises copper and the feedstock comprises aluminum.
25. The nozzle of any of clauses 22 to 24, wherein, in use, the cryogenic source expands in volume when in contact with the nozzle such that the expanded cryogenic source shields the arc and the molten feedstock.
26. The nozzle of clause 25, wherein the cryogenic source solidifies a spatter from the molten feedstock such that the spatter substantially resists attaching to the nozzle.
27. The nozzle of any of clauses 22 to 26, wherein the shielding gas is a second cryogenic source.
28. The nozzle of any of clauses 22 to 26, wherein the shielding gas is a room temperature shielding gas.
29. The nozzle of any of clauses 22 to 28, wherein the shielding gas consists essentially of argon, helium, carbon dioxide, nitrogen, hydrogen, neon, xenon, or a combination thereof.
30. The nozzle of any of clauses 22 to 29, wherein the cryogenic source consists essentially of cryogenic liquid argon, cryogenic liquid nitrogen, cryogenic liquid helium, cryogenic liquid neon, cryogenic liquid oxygen, cryogenic liquid xenon, cryogenic argon gas, cryogenic nitrogen gas, cryogenic helium gas, cryogenic neon gas, cryogenic oxygen gas, cryogenic xenon gas, cryogenic air, or a combination thereof.
31. The nozzle of clause 27, wherein the second cryogenic source consists essentially of cryogenic liquid argon, cryogenic liquid nitrogen, cryogenic liquid helium, cryogenic liquid neon, cryogenic liquid oxygen, cryogenic liquid xenon, cryogenic argon gas, cryogenic nitrogen gas, cryogenic helium gas, cryogenic neon gas, cryogenic oxygen gas, cryogenic xenon gas, cryogenic air, or a combination thereof.
32. The nozzle of any of clauses 22 to 31, wherein the cryogenic source has a temperature lower than or equal to -190 °C.
33. A method operating a nozzle, comprising:
   feeding a feedstock from a proximal end of the nozzle to a distal end of the nozzle proximal a welding arc;
   with the welding arc, melting the feedstock;
   feeding a cryogenic source through the nozzle toward the arc, thereby expanding the cryogenic source; and
   with the expanded cryogenic source, solidifying a spatter from the molten feedstock such that the spatter substantially resists attaching to the nozzle.
34. The method of clause 33, wherein the nozzle has a higher melting temperature than the feedstock.
35. The method of clause 33 or 34, wherein the nozzle comprises a material that includes more copper than any other individual material and the feedstock includes more aluminum than any other individual material.
36. The method of any of clauses 33 to 35, wherein the cryogenic source is selected from the group consisting of: cryogenic liquid argon, cryogenic liquid nitrogen, cryogenic liquid helium, cryogenic liquid neon, cryogenic liquid oxygen, cryogenic liquid xenon, cryogenic argon gas, cryogenic nitrogen gas, cryogenic helium gas, cryogenic neon gas, cryogenic oxygen gas, cryogenic xenon gas, cryogenic air, and combinations thereof.
37. The method of any of clauses 33 to 36, wherein the cryogenic source has a temperature lower than or equal to -190 °C.
38. The method of any of clauses 33 to 37, further comprising feeding a second cryogenic source through the nozzle via a second nozzle channel that is distinct from a first nozzle channel configured to carry the cryogenic source.
39. The method of clause 38, wherein the second cryogenic source is selected from the group consisting of: cryogenic liquid argon, cryogenic liquid nitrogen, cryogenic liquid helium, cryogenic liquid neon, cryogenic liquid oxygen, cryogenic liquid xenon, cryogenic argon gas, cryogenic nitrogen gas, cryogenic helium gas, cryogenic neon gas, cryogenic oxygen gas, cryogenic xenon gas, cryogenic air, and any combinations thereof.
40. The method of any of clauses 33 to 39, wherein the feedstock is fed through an inner channel of the nozzle and the cryogenic source is fed through an outer channel of the nozzle concentrically located exterior to the inner channel.
41.The method of clause 40, further comprising feeding a shielding gas around the feedstock through the inner channel of the nozzle.
42. The method of clause 41, wherein the shielding gas is a second cryogenic source.
43.The method of clause 41, wherein the shielding gas is not a cryogenic liquid or a cryogenic gas.
44. The method of clause 41, wherein the shielding gas is selected from the group consisting of: argon, helium, carbon dioxide, nitrogen, hydrogen, neon, xenon, and combinations thereof.

## Claims

1. An additive manufacturing system comprising:
an electric energy source configured to provide an electric energy; and
a print head configured to receive a feedstock and a cryogenic fluid and pass the feedstock and the cryogenic fluid through a distal end thereof;
wherein the electric energy is configured to produce an arc proximal to the distal end of the print head such that the arc melts the feedstock to produce a molten feedstock, and wherein the print head deposits the molten feedstock on a substrate to form a part; and
wherein the cryogenic fluid expands in volume when exiting the print head, and wherein the print head is disposed such that the expanded cryogenic fluid at least one of: shields or cools at least one of: the arc, the molten feedstock, and the part.

2. The system of claim 1, wherein the expanded cryogenic fluid shields the arc and the molten feedstock, and cools the part.

3. The system of claims 1 or 2, wherein the print head comprises a material with a higher melting temperature than the feedstock; or wherein the print head comprises copper and the feedstock comprises aluminum.

4. The system of claim 3, wherein the expanded cryogenic fluid solidifies a spatter comprising the molten feedstock such that the spatter substantially resists attaching to the print head.

5. The system of any preceding claim, further comprising a cryogenic source comprising a cryogenic storage tank and a cryogenic hose to supply the cryogenic fluid to the print head.

6. The system of any preceding claim, wherein the print head comprises a first channel and a second channel adjacent to and separate from the first channel, wherein the first channel is configured to receive the cryogenic fluid and the second channel is configured to receive a second cryogenic fluid; or wherein the print head comprises a first channel and a second channel adjacent to and separate from the first channel, wherein the first channel is configured to receive a shielding gas and the second channel is configured to receive the cryogenic fluid.

7. The system of claim 6, wherein the shielding gas comprises argon, helium, carbon dioxide, nitrogen, hydrogen, neon, xenon, or a combination thereof.

8. The system of any preceding claim, wherein the cryogenic fluid comprises cryogenic liquid argon, cryogenic liquid nitrogen, cryogenic liquid helium, cryogenic liquid neon, cryogenic liquid oxygen, cryogenic liquid xenon, cryogenic argon gas, cryogenic nitrogen gas, cryogenic helium gas, cryogenic neon gas, cryogenic oxygen gas, cryogenic xenon gas, cryogenic air, or a combination thereof.

9. The system of any preceding claim, wherein the cryogenic fluid has a temperature lower than or equal to -190 °C.

10. The system of any preceding claim, further comprising a nozzle configured to receive the cryogenic fluid from a first end thereof, and wherein a second end has at least one outlet disposed proximal to a portion of the part proximal to the substrate such that the cryogenic fluid cools the part during printing.

11. The system of claim 10, wherein the nozzle comprises a circumferential chamber concentric with a central bore; wherein the circumferential chamber comprises an inlet channel on the first end configured to receive the cryogenic fluid, and the at least one outlet is a hole.

12. The system of claim 11, wherein the nozzle comprises a plurality of outlets disposed circumferentially around the chamber.

13. The system of any of claims 10 to 12, wherein the nozzle further comprises a spray guard disposed around the second end.

14. The system of any of claims 1 to 9, further comprising a nozzle configured to receive the cryogenic fluid from a first end thereof, and wherein a second end has a plurality of outlets disposed about a perimeter of an arc source such that the cryogenic fluid cools the molten feedstock during printing.

15. The system of claim 14, wherein the nozzle comprises a circumferential chamber concentric with a central bore; wherein the circumferential chamber comprises an inlet channel on the first end configured to receive the cryogenic fluid, and each of the plurality of outlets is a hole.
